(19) Europäisches Patentamt
European Patent Office
Office européen des brevets

(11) **EP 4 005 405 A1**

(12) **EUROPEAN PATENT APPLICATION**
published in accordance with Art. 153(4) EPC

(43) Date of publication:
**01.06.2022 Bulletin 2022/22**

(21) Application number: **20846315.8**

(22) Date of filing: **27.07.2020**

(51) International Patent Classification (IPC):
**A24D 1/20** (2020.01)     **A24D 1/22** (2020.01)
**A24F 47/00** (2020.01)     **A24F 40/20** (2020.01)
**A24F 42/10** (2020.01)

(52) Cooperative Patent Classification (CPC):
**A24D 1/20; A24D 1/22; A24F 40/20; A24F 42/10;
A24F 47/00**

(86) International application number:
**PCT/JP2020/028711**

(87) International publication number:
**WO 2021/020348 (04.02.2021 Gazette 2021/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2019 JP 2019141414**

(71) Applicant: **Japan Tobacco Inc.
Tokyo 105-6927 (JP)**

(72) Inventors:
• **KOYAMA, Kenta
Tokyo 130-8603 (JP)**
• **UCHII, Kimitaka
Tokyo 130-8603 (JP)**
• **NANASAKI, Yusuke
Tokyo 130-8603 (JP)**

(74) Representative: **Hoffmann Eitle
Patent- und Rechtsanwälte PartmbB
Arabellastraße 30
81925 München (DE)**

(54) **HEAT-NOT-BURN TOBACCO PRODUCT AND HEATED TOBACCO PRODUCT**

(57)     This heat-not burn tobacco product comprises a tobacco filler, a rolling paper which is wrapped around the tobacco filler, and a mouthpiece member. In the heat-not burn tobacco product, at least a portion of the tobacco filler is heated to 150°C or higher, the tobacco filler comprises an aerosol generation substrate, and to at least one of the tobacco filler, the rolling paper, and the mouthpiece member, benzoic acid is added to a concentration of 100-10000 ppm therein.

FIG. 1

EP 4 005 405 A1

**Description**

Technical Field

The present invention relates to a heat-not-burn tobacco and a heated tobacco product.

Background Art

A heated tobacco product constituted by a heat-not-burn tobacco and a heating device including a heat source has been developed. The heat-not-burn tobacco generally includes a tobacco filler composed of a composition including shredded tobacco, an aerosol-source material, and the like. When the heated tobacco product is used, the heat-not-burn tobacco is inserted or placed in the heating device. Then, the heat source of the heating device is caused to generate heat, and the tobacco filler in the heat-not-burn tobacco is heated by using the heat, as a result of which a smoke taste component is delivered to the user together with aerosols.

In the field of tobacco-related technology, particularly in the field of heat-not-burn tobacco products, there are cases where a smoke taste component generated by heating a tobacco filler causes the user to feel a "smoke flavor inhibition" described later, and it is desired to suppress the smoke flavor inhibition and improve the smoke taste of a heat-not-burn tobacco. A technique of adding an acid satisfying specific conditions (primary acid dissociation constant: 4.0 or more and 6.0 or less, boiling point: 366°C or higher and 600°C or lower) to a tobacco filler of a heat-not-burn tobacco in order to suppress the smoke flavor inhibition has been reported (PTL 1).

Citation List

Patent Literature

PTL 1: International Publication No. WO2017/203686

Summary of Invention

Technical Problem

However, the acid satisfying the specific conditions described in PTL 1 is an acid having a very high boiling point, and accordingly, the present inventors have studied to suppress the smoke flavor inhibition with an acid not satisfying the specific conditions.

In the study, an attempt was made to add benzoic acid, which is commonly used as a food additive, to a heat-not-burn tobacco. The boiling point of benzoic acid is 249°C, which is lower than that of the acid used in PTL 1. Therefore, benzoic acid volatilizes in a short time in the use of a heat-not-burn tobacco in which the tobacco filler is heated at a temperature close to the boiling point thereof, and the effect of suppressing the smoke flavor inhibition cannot be maintained until the last stage of the use of one heat-not-burn tobacco. On the other hand, in the use of a heat-not-burn tobacco in which the tobacco filler is heated at a temperature much lower than the boiling point of benzoic acid, benzoic acid does not volatilize sufficiently, and therefore it is expected that the effect of suppressing the smoke flavor inhibition is not produced.

Thus, it is an object of the present invention to provide a heat-not-burn tobacco and a heated tobacco product that overcome the above problems and can suppress the smoke flavor inhibition throughout the use of one heat-not-burn tobacco from the early stage to the last stage without impairing the effect by adding benzoic acid.

Solution to Problem

The present inventors have conducted intensive studies and found that by adding a specific concentration of benzoic acid to at least one addition object constituting a heat-not-burn tobacco, the smoke flavor inhibition can be suppressed throughout the use of one heat-not-burn tobacco from the early stage to the last stage, thereby accomplishing the present invention.

Thus, the gist of the present invention is as follows.

[1] A heat-not-burn tobacco including a tobacco filler, wrapping paper that wraps the tobacco filler, and a mouthpiece member,

wherein in the heat-not-burn tobacco, at least part of the tobacco filler is heated at 150°C or higher,

the tobacco filler includes an aerosol-source material, and
benzoic acid is added to at least one of the tobacco filler, the wrapping paper, and the mouthpiece member such that a concentration in the addition object to which the benzoic acid is added is 100 ppm or more and 10000 ppm or less.

[2] The heat-not-burn tobacco according to [1], wherein the benzoic acid is added to a portion of the addition object that is heated to 150°C or higher and 250°C or lower when the heat-not-burn tobacco is heated.

[3] The heat-not-burn tobacco according to [1] or [2], wherein the benzoic acid is added to the tobacco filler.

[4] The heat-not-burn tobacco according to any one of [1] to [3], wherein the mouthpiece member includes at least a support portion and a filter portion, the support portion is disposed closer to the tobacco filler than the filter portion is, and the benzoic acid is added to the support portion.

[5] The heat-not-burn tobacco according to any one of [1] to [4], wherein the tobacco filler is composed of a composition further containing shredded tobacco or ground tobacco.

[6] The heat-not-burn tobacco according to any one of [1] to [4], wherein the tobacco filler is composed of a tobacco sheet.

[7] The heat-not-burn tobacco according to any one of [1] to [4], wherein the tobacco filler is composed of tobacco granules.

[8] The heat-not-burn tobacco according to any one of [1] to [7], wherein the benzoic acid is added such that a concentration in the addition object is 2000 ppm or more and less than 5000 ppm.

[9] The heat-not-burn tobacco according to any one of [1] to [7], wherein the benzoic acid is added such that a concentration in the addition object is 5000 ppm or more and 10000 ppm or less.

[10] An electrically heated tobacco product including:

an electrically heating device including a heater member, a battery unit that serves as a power source for the heater member, and a control unit for controlling the heater member; and
the heat-not-burn tobacco according to any one of [1] to [9] configured to be inserted so as to be in contact with the heater member.

[11] A heat-not-burn tobacco including a tobacco filler and a holder for the tobacco filler,

wherein in the heat-not-burn tobacco, at least part of the tobacco filler is heated at 150°C or higher,
the tobacco filler includes an aerosol-source material, and
benzoic acid is added to the tobacco filler such that a concentration in the tobacco filler is 100 ppm or more and 10000 ppm or less.

[12] The heat-not-burn tobacco according to [11], wherein the benzoic acid is added to a portion of the tobacco filler that is heated to 150°C or higher and 250°C or lower when the heat-not-burn tobacco is heated.

[13] The heat-not-burn tobacco according to [11] or [12], wherein the tobacco filler is composed of a composition further containing shredded tobacco or ground tobacco.

[14] The heat-not-burn tobacco according to [11] or [12], wherein the tobacco filler is composed of a tobacco sheet.

[15] The heat-not-burn tobacco according to [11] or [12], wherein the tobacco filler is composed of tobacco granules.

[16] The heat-not-burn tobacco according to any one of [11] to [15], wherein the benzoic acid is added such that a concentration in the tobacco filler is 2000 ppm or more and less than 5000 ppm.

[17] The heat-not-burn tobacco according to any one of [11] to [15], wherein the benzoic acid is added such that a concentration in the tobacco filler is 5000 ppm or more and 10000 ppm or less.

[18] A heated tobacco product that uses a combustive heat source, the heated tobacco product including:

a heating device including a tubular holding member extending from an ignition end to a non-ignition end and the combustive heat source provided at the ignition end; and
the heat-not-burn tobacco according to any one of [11] to [17] disposed in the holding member so as to be closer to the non-ignition end than the combustive heat source is.

[19] A heat-not-burn tobacco including a tobacco filler and a holder for the tobacco filler, wherein

in the heat-not-burn tobacco, the tobacco filler is heated at a temperature of lower than 150°C, and
benzoic acid is added to the tobacco filler such that a concentration in the tobacco filler is 100 ppm or more and 10000 ppm or less.

[20] The heat-not-burn tobacco according to [19], further including an aerosol-source material.

[21] The heat-not-burn tobacco according to [20], wherein the tobacco filler is composed of a composition containing shredded tobacco or ground tobacco.

[22] The heat-not-burn tobacco according to [20], wherein the tobacco filler is composed of a tobacco sheet.

[23] The heat-not-burn tobacco according to [20], wherein the tobacco filler is composed of tobacco granules.

[24] The heat-not-burn tobacco according to any one of [20] to [23], wherein the benzoic acid is added such that a concentration in the tobacco filler is 2500 ppm or more and less than 5000 ppm.

[25] The heat-not-burn tobacco according to any one of [20] to [23], wherein the benzoic acid is added such that a concentration in the tobacco filler is 5000 ppm or more and 10000 ppm or less.

[26] An electrically heated tobacco product including:

an electrically heating device including a heater member, a battery unit that serves as a power source for the heater member, a control unit for controlling the heater member, and a mouthpiece; and
the heat-not-burn tobacco according to any one of [20] to [25].

Advantageous Effects of Invention

The present invention provides a heat-not-burn tobacco and a heated tobacco product that can suppress the smoke flavor inhibition throughout the use of one heat-not-burn tobacco from the early stage to the last stage.

Brief Description of Drawings

[Fig. 1] Fig. 1 is a schematic view of a heat-not-burn tobacco according to a first embodiment of the present invention.
[Fig. 2] Fig. 2 is a schematic view of a heat-not-burn tobacco according to second and third embodiments of the present invention.
[Fig. 3] Fig. 3 is a schematic view of an electrically heated tobacco product in which the heat-not-burn tobacco according to the first embodiment of the present invention is heated from inside with an electrically heating device.
[Fig. 4] Fig. 4 is a schematic view of an electrically heated tobacco product in which the heat-not-burn tobacco according to the first embodiment of the present invention is heated from outside with an electrically heating device.
[Fig. 5] Fig. 5 is a schematic view of a tobacco product in which the heat-not-burn tobacco according to the second embodiment of the present invention is heated with a heating device that uses a combustion-type heat source.
[Fig. 6] Fig. 6 is a schematic view of an electrically heated tobacco product in which the heat-not-burn tobacco according to the third embodiment of the present invention is heated with an electrically heating device.
[Fig. 7] Fig. 7 is a graph showing the temperature change overtime at measurement locations (1) to (3) in a tobacco rod of the heat-not-burn tobacco according to the first embodiment of the present invention heated from inside with an electrically heating device.
[Fig. 8] Fig. 8 is a graph showing the temperature change overtime at measurement locations (4) and (5) in a tobacco rod of the heat-not-burn tobacco according to the first embodiment of the present invention heated from outside with an electrically heating device.

Description of Embodiments

Although embodiments of the present invention will be described in detail below, these descriptions are examples (representative examples) of embodiments of the present invention, and the present invention is not limited to the contents of the descriptions as long as it does not depart from the spirit thereof.

In this DESCRIPTION, when a range is expressed using numerical values or physical properties values with "to" interposed therebetween, the values before and after "to" are meant to be included in the range.

1. Heat-not-burn tobacco

A heat-not-burn tobacco according to an embodiment of the present invention (hereinafter also referred to simply as a "heat-not-burn tobacco") is broadly classified into the following embodiments.

In a first embodiment, a heat-not-burn tobacco includes a tobacco filler, wrapping paper that wraps the tobacco filler, and a mouthpiece member. In the heat-not-burn tobacco, at least part of the tobacco filler is heated at 150°C or higher, the tobacco filler includes an aerosol-source material, and benzoic acid is added to at least one of the tobacco filler, the wrapping paper, and the mouthpiece member such that a concentration in the addition object to which the benzoic acid is added is 100 ppm or more and 10000 ppm or less.

In a second embodiment, a heat-not-burn tobacco includes a tobacco filler and a holder for the tobacco filler. In the heat-not-burn tobacco, at least part of the tobacco filler is heated at 150°C or higher, the tobacco filler includes an aerosol-source material, and benzoic acid is added to the tobacco filler such that a concentration in the tobacco filler is 100 ppm or more and 10000 ppm or less.

In a third embodiment, a heat-not-burn tobacco includes a tobacco filler and a holder for the tobacco filler. In the heat-not-burn tobacco, the tobacco filler is heated at a temperature of lower than 150°C, and benzoic acid is added to the tobacco filler such that a concentration in the tobacco filler is 100 ppm or more and 10000 ppm or less.

Each of these embodiments will be described in detail below.

<First embodiment>

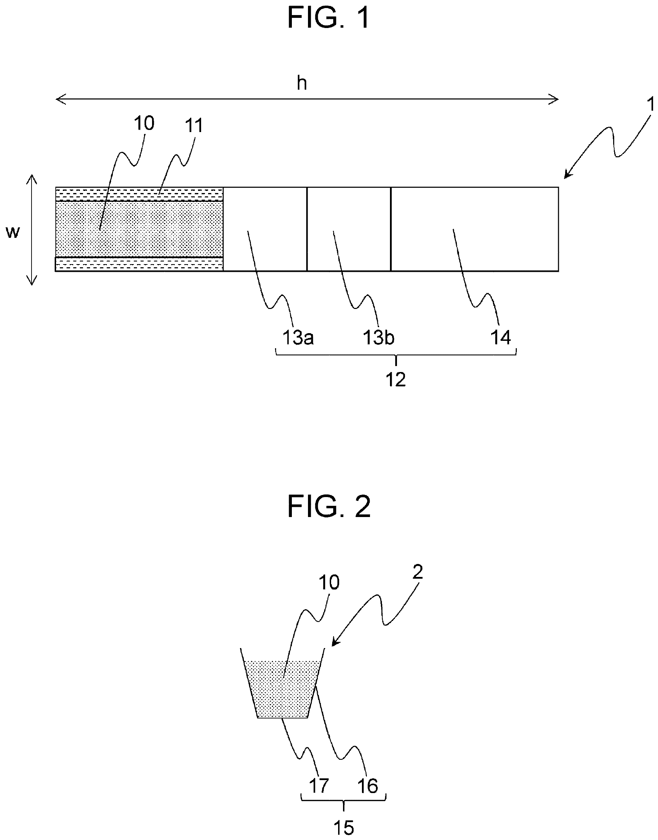

An example of the heat-not-burn tobacco according to the first embodiment of the present invention (hereinafter also referred to simply as the "first heat-not-burn tobacco") is shown in Fig. 1. Hereinafter, the first heat-not-burn tobacco will be described with reference to the drawings. The direction of h in Fig. 1 is the longitudinal direction of the first heat-not-burn tobacco.

As shown in Fig. 1, the configuration of a first heat-not-burn tobacco 1 includes a tobacco filler 10, wrapping paper 11, and a mouthpiece member 12. Each component will be described later. In the first heat-not-burn tobacco 1, the tobacco filler 10, the wrapping paper 11, and the mouthpiece member 12 are also referred to as the "addition objects".

In the first heat-not-burn tobacco 1, at least part of the tobacco filler 10 is heated at 150°C or higher.

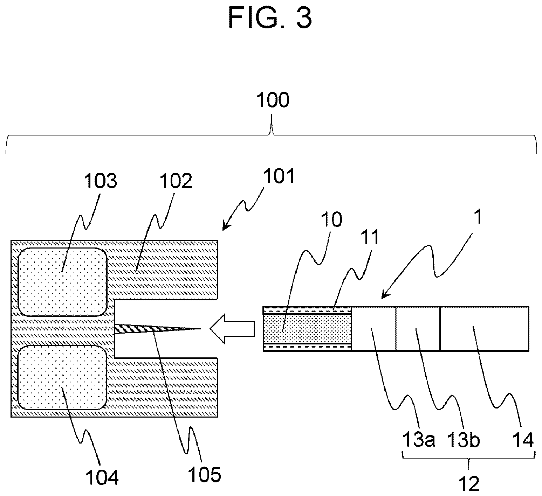

For example, in an embodiment where a tobacco rod constituting the first heat-not-burn tobacco 1 is heated from inside thereof with a heater member 105 as shown in Fig. 3, the heater member 105 heats at least part of the tobacco filler 10 at 150°C or higher. At least part of the tobacco filler 10 in this case refers to, for example, a portion of the tobacco filler that is in contact with the heater member 105 or a portion of the tobacco filler that is close to the heater member 105, and has a weight of 85% or more of the total weight of the tobacco filler in the first heat-not-burn tobacco. Specifically, when the first heat-not-burn tobacco has a diameter of 7 mm, at least part of the tobacco filler 10 refers to a portion of the tobacco filler that is located at a distance of 2 mm or less from the surface of the heater member.

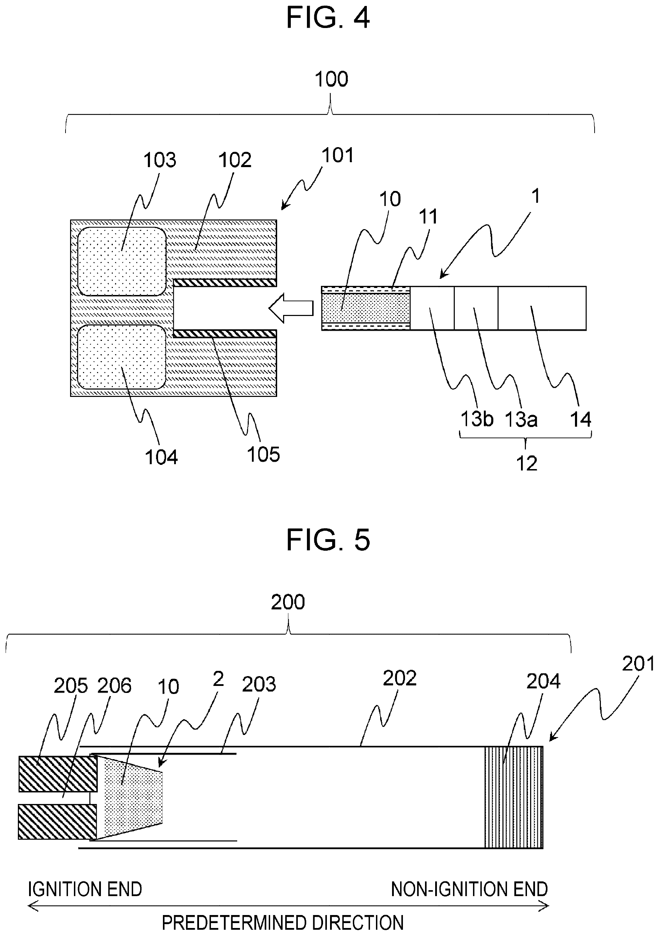

In an embodiment where a tobacco rod constituting the first heat-not-burn tobacco 1 is heated from outside thereof with a heater member 105 as shown in Fig. 4, the heater member 105 heats at least part of the tobacco filler 10 at 150°C or higher.

At least part of the tobacco filler 10 in this case refers to, for example, a portion of the tobacco filler that is in contact with the wrapping paper 11 or a portion of the tobacco filler that is close to the heater member 105, and has a weight of 85% or more of the total weight of the tobacco filler in the first heat-not-burn tobacco. Specifically, when the first heat-not-burn tobacco has a diameter of 7 mm, at least part of the tobacco filler 10 refers to a portion of the tobacco filler that is located at a distance of 3 mm or less from the surface of the heater member.

The first heat-not-burn tobacco preferably has a columnar shape satisfying a shape having an aspect ratio as defined below of 1 or more.

$$\text{Aspect ratio} = h/w$$

w is the width of the bottom surface of a columnar body (in this DESCRIPTION, the width of the bottom surface on the tobacco rod portion side), and h is the height of the columnar body. Preferably, $h \geq w$. However, in this DESCRIPTION, the longitudinal direction is defined as the direction indicated by h, as described above. Thus, even when $w \geq h$, the direction indicated by h is referred to as the longitudinal direction for convenience. The shape of the bottom surface is not limited and may be, for example, polygonal, rounded polygonal, circular, or elliptic. The width w is the diameter when the bottom surface is circular, the major diameter when the bottom surface is elliptic, and the diameter of a circumscribed circle or the major diameter of a circumscribed ellipse when the bottom surface is polygonal or rounded polygonal. For example, in the embodiment shown in Fig. 1, since the bottom surface is circular, its diameter can be determined. The diameter is the width w, and the length orthogonal to the width w is the height h.

The length h of the longitudinal direction of the first heat-not-burn tobacco is not particularly limited, and is, for example, typically 40 mm or more, preferably 45 mm or more, more preferably 50 mm or more. The length h is typically 100 mm or less, preferably 90 mm or less, more preferably 80 mm or less.

The width w of the bottom surface of the columnar body of the first heat-not-burn tobacco is not particularly limited, and is, for example, typically 5 mm or more, preferably 5.5 mm or more. The width w is typically 10 mm or less, preferably 9 mm or less, more preferably 8 mm or less.

<Second and third embodiments>

Fig. 2 shows an example of the heat-not-burn tobacco according to the second and third embodiments of the present invention. Hereinafter, the heat-not-burn tobacco according to the second embodiment is also referred to simply as the "second heat-not-burn tobacco", and the heat-not-burn tobacco according to the third embodiment is also referred to simply as the "third heat-not-burn tobacco". The second and third heat-not-burn tobaccos will be described below with reference to Fig. 2.

The configuration of the second and third heat-not-burn tobaccos includes a tobacco filler and a holder for the tobacco filler, as shown in Fig. 2. Each component will be described later. In the following description, the tobacco filler of the second and third heat-not-burn tobaccos may be referred to as an "addition object".

The shape of the second and third heat-not-burn tobaccos is not particularly limited, but since the tobacco filler is held in the holder, the shape may, for example, match the shape of the holder. The holder will be described later.

In the second heat-not-burn tobacco, at least part of the tobacco filler is heated at 150°C or higher.

For example, in an embodiment where a second heat-not-burn tobacco 2 is heated with a combustion-type heat source 205 as shown in Fig. 5, the combustion-type heat source 205 heats at least part of the tobacco filler 10 at 150°C or higher. At least part of the tobacco filler 10 in this case has a weight of 85% or more of the total weight of the tobacco filler in the second heat-not-burn tobacco. Specifically, when the heat-not-burn tobacco has a diameter of 7 mm, at least part of the tobacco filler 10 refers to a portion of the tobacco filler that is located at a distance of 2 mm or less from the surface of the combustion-type heat source.

In the third heat-not-burn tobacco, the temperature at which the tobacco filler is heated is lower than 150°C.

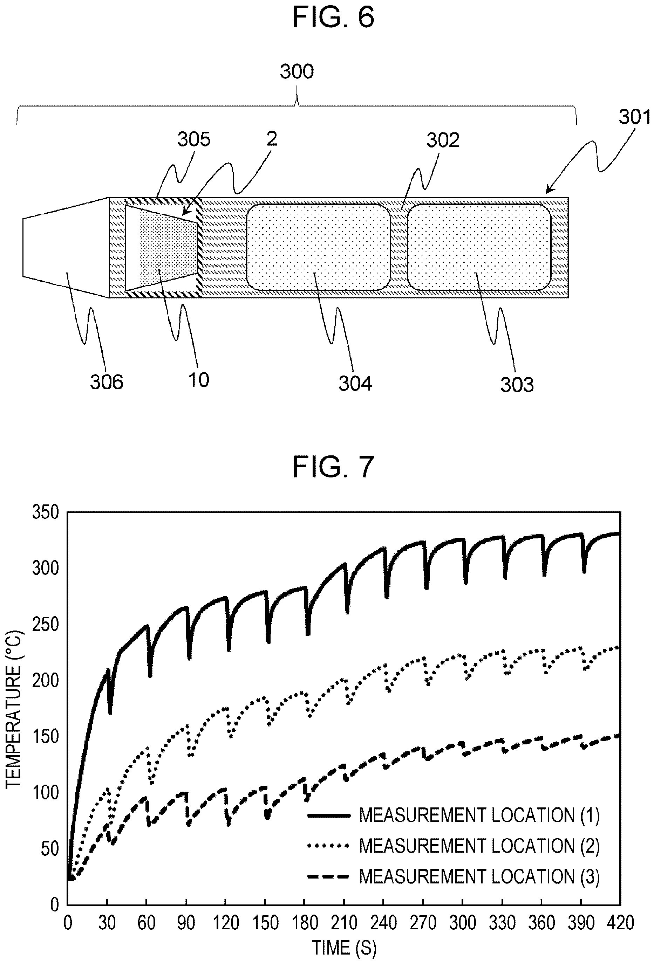

For example, in an embodiment where a third heat-not-burn tobacco 2 is heated with a heater member 305 as shown in Fig. 6, the heater member 305 heats the tobacco filler 10. In this embodiment, the temperature at which the tobacco filler 10 is heated by the heater member 305 is lower than 150°C

Unlike the above, in the third heat-not-burn tobacco, an embodiment where the tobacco filler is not directly heated by the heater member may also be employed. In this embodiment, the third heat-not-burn tobacco further includes an aerosol-source material. That is, the third heat-not-burn tobacco includes a tobacco filler, a holder for the tobacco filler, and an aerosol-source material.

The aerosol-source material becomes aerosol smoke upon heating with the heater member, and the aerosol smoke comes into contact with the tobacco filler, whereby the tobacco filler is heated. Steam containing a smoke taste component is generated from the heated tobacco filler.

The aerosol-source material will be described later.


<Benzoic acid>

In the first heat-not-burn tobacco, benzoic acid is added to at least one of the tobacco filler, the wrapping paper, and the mouthpiece member.

In the second and third heat-not-burn tobaccos, benzoic acid is added to the tobacco filler.

In the first, second, and third heat-not-burn tobaccos, benzoic acid is added such that a concentration in the addition object is in the range of 100 ppm or more and 10000 ppm or less.

When the concentration of benzoic acid is less than 100 ppm, the smoke flavor inhibition cannot be suppressed. When the concentration is higher than 10000 ppm, the desired smoke taste, particularly a stimulus peculiar to tobacco, cannot be sufficiently obtained.

"Benzoic acid" in this DESCRIPTION does not include derivatives of benzoic acid such as benzoic acid salts and benzoic acid esters.

In this DESCRIPTION, the smoke flavor inhibition means that when a heat-not-burn tobacco is used, the user receives a stimulus different from the stimulus peculiar to tobacco or experiences a physiological spontaneous reaction such as "choking". This is probably because the tobacco filler contains a component that inhibits the smoke taste, and this component volatilizes together with a solvent such as propylene glycol, as a result of which the user feels the smoke flavor inhibition.

In each heat-not-burn tobacco of the present invention, the smoke flavor inhibition can be suppressed by setting the concentration of the benzoic acid within the above range.

With regard to the mechanism by which benzoic acid suppresses the smoke flavor inhibition during the use of each heat-not-burn tobacco, the inventors have predicted that benzoic acid and a substance that inhibits the smoke taste contained in the tobacco filler are volatilized by heating and combined in a gaseous state, thereby making it difficult for the substance to bind to organs where the user receives the smoke flavor inhibition, that is, organs from the oral cavity to the trachea and further from the trachea to the lung.

In the first and second heat-not-burn tobaccos, when the concentration of benzoic acid is set to 2000 ppm or more and less than 5000 ppm, a smoke taste sufficiently having the above-described stimulus peculiar to tobacco can be obtained, and when the concentration of benzoic acid is set to 5000 ppm or more and 10000 ppm or less, a smoke taste in which the above-described stimulus peculiar to tobacco is suppressed to some extent can be obtained.

In the third heat-not-burn tobacco, when the concentration of benzoic acid is set to 2500 ppm or more and less than 5000 ppm, a smoke taste sufficiently having the above-described stimulus peculiar to tobacco can be obtained, and when the concentration of benzoic acid is set to 5000 ppm or more and 10000 ppm or less, a smoke taste in which the above-described stimulus peculiar to tobacco is suppressed to some extent can be obtained.

The concentration of benzoic acid can be adjusted by controlling the amount of benzoic acid added to the addition object in the production of each heat-not-burn tobacco.

In the first and second embodiments of the present invention, the benzoic acid is preferably added to a portion of the addition object that is heated to 150°C or higher and 250°C or lower when the first and second heat-not-burn tobaccos are heated.

The present inventors have focused on the relationship between the boiling point of benzoic acid and the temperature in the addition object during heating of the first and second heat-not-burn tobaccos, in order to suppress the smoke flavor inhibition throughout the use of one heat-not-burn tobacco from the early stage to the last stage.

As described above, the boiling point of benzoic acid is 249°C. On the other hand, when the first and second heat-not-burn tobaccos are used, at least part of the tobacco filler is heated at 150°C or higher by a heat source of a heating device described later. At this time, the temperature of the addition object becomes higher at a position closer to the heat source. Therefore, when benzoic acid is added only to a portion of the addition object that is close to the heat source, and the portion is heated at a temperature much higher than the boiling point of benzoic acid, benzoic acid volatilizes in a short time. In this case, the smoke flavor inhibition cannot be suppressed throughout the use of one heat-not-burn tobacco from the early stage to the last stage.

Thus, the present inventors have found that it is preferable to add benzoic acid to a portion of the addition object that is heated to 150°C or higher and 250°C or lower when the first and second heat-not-burn tobaccos are heated. In such an embodiment, the smoke flavor inhibition can be further suppressed throughout the use of one heat-not-burn tobacco from the early stage to the last stage.

Examples of the embodiment where benzoic acid is added to a portion of the addition object that is heated to 150°C or higher and 250°C or lower include an embodiment where benzoic acid is added only to a portion of the addition object that is heated to 150°C or higher and 250°C or lower, but other embodiments may be employed.

For example, benzoic acid may be added to the whole of the tobacco filler constituting the heat-not-burn tobacco, and in this case, the distribution of benzoic acid in the tobacco filler may be even or uneven. Alternatively, benzoic acid may be added to a surface of the wrapping paper constituting the heat-not-burn tobacco that is in contact with the tobacco filler, or benzoic acid may be added to a support. In these embodiments, the benzoic acid added may be partially present in a portion of the addition object that is heated at a temperature lower than 150°C and a portion of the addition object that is heated at a temperature higher than 250°C. In this case, the ratio of the content of benzoic acid present in a portion of the addition object that is heated to 150°C or higher and 250°C or lower to the content of benzoic acid present in a portion of the addition object that is heated at a temperature lower than 150°C and in a portion of the addition object that is heated at a temperature higher than 250°C is preferably within the range of 50:50 to 99:1. These embodiments are preferred from the viewpoint of production cost because benzoic acid can be added more simply than in the embodiment where benzoic acid is added only to a portion of the addition object that is heated to 150°C or higher and 250°C or lower.

By contrast, when benzoic acid is added only to a portion of the addition object that is heated at a temperature higher than 250°C when the first and second heat-not-burn tobaccos are heated, the benzoic acid volatilizes in a short time, and thus the smoke flavor inhibition cannot be suppressed throughout the use of one heat-not-burn tobacco from the early stage to the last stage.

As used herein, the phrase "the use of one heat-not-burn tobacco from the early stage to the last stage" refers to a period from when a user starts to suck a smoke taste after heating a heat-not-burn tobacco to a predetermined temperature with a heating device (the early stage) until the user does not feel the smoke taste (the last stage).

The term "boiling point" as used herein means a boiling point under a pressure of 760 mmHg.

<Addition object>

1. Tobacco filler

In the first heat-not-burn tobacco, benzoic acid may be added to the tobacco filler. Example the embodiment where benzoic acid is added to the tobacco filler constituting the first heat-not-burn tobacco include an embodiment where benzoic acid is added to the whole of the tobacco filler, and in this case, the distribution of benzoic acid in the tobacco filler may be even or uneven. Alternatively, an embodiment where benzoic acid is added to a surface of the tobacco filler that is in contact with the wrapping paper may be employed.

In the second and third heat-not-burn tobaccos, benzoic acid is added to the tobacco filler. Example the embodiment where benzoic acid is added to the tobacco filler constituting the second and third heat-not-burn tobaccos include an embodiment where the benzoic acid is added to the whole of the tobacco filler, and in this case, the distribution of benzoic acid in the tobacco filler may be even or uneven.

The method of adding benzoic acid to the tobacco filler will be described later.

The tobacco filler is not particularly limited, and a filler composed of a composition containing shredded tobacco or ground tobacco (hereinafter also referred to as a "first tobacco filler") may be used. The tobacco filler may be a filler composed of a tobacco sheet, and examples thereof include a filler composed of a plurality of tobacco sheets (hereinafter also referred to as a "second tobacco filler") and a filler composed of a single tobacco sheet (hereinafter also referred to as a "third tobacco filler"). The tobacco filler may also be a granular filler, that is, a filler composed of tobacco granules (hereinafter also referred to as a "fourth tobacco filler").

The tobacco rod formed by wrapping the tobacco filler with the wrapping paper preferably has a columnar shape, and in this case, the aspect ratio of the longitudinal height of the tobacco rod to the width of the bottom surface of the tobacco rod portion is preferably 1 or more.

The shape of the bottom surface is not limited and may be, for example, polygonal, rounded polygonal, circular, or elliptic. The width is the diameter when the bottom surface is circular, the major diameter when the bottom surface is elliptic, and the diameter of a circumscribed circle or the major diameter of a circumscribed ellipse when the bottom surface is polygonal or rounded polygonal. For example, in the embodiment shown in Fig. 1, since the bottom surface is circular, its diameter can be determined. The diameter is the width, and the length orthogonal to the width is the height. The tobacco filler constituting the tobacco rod preferably has a height about 10 mm to 70 mm and a width of about 4 mm to 9 mm

The tobacco rod may have a fitting portion that fits with a heater member or the like for heating the heat-not-burn tobacco.

1-1. First tobacco filler

First, the first filler will be described. The material of the shredded tobacco contained in the first filler is not particularly limited, and a known material such as a lamina or a midrib can be used. A material obtained by grinding dried tobacco leaves to an average particle size of 20 $\mu$m to 200 $\mu$m to provide ground tobacco and shredding a product of the ground tobacco that has been homogenized and processed into a sheet (hereinafter also referred to simply as a homogenized sheet) may also be used. Furthermore, a so-called strand-type material, which is obtained by shredding a homogenized sheet having a length comparable to the longitudinal length of the tobacco rod in a direction substantially parallel to the longitudinal direction of the tobacco rod and is loaded into the tobacco rod, may also be used. The width of the shredded tobacco is preferably 0.5 mm to 2.0 mm for the loading into the tobacco rod. In the case of a tobacco rod with a circumference of 22 mm and a length of 20 mm, the content of the tobacco filler in the tobacco rod may be 200 mg/rod to 800 mg/rod, and is preferably 250 mg/rod to 600 mg/rod. For the tobacco leaves used to prepare the shredded tobacco and the homogenized sheet, various types of tobacco can be used. Examples include flue-cured tobacco, burley tobacco, oriental tobacco, domestic tobacco, nicotiana tabacum tobacco, nicotiana rustica tobacco, and mixtures thereof. For the mixtures, these various types of tobacco may be appropriately blended so as to achieve the desired taste. Details of the types of tobacco are disclosed in "Tabako-no-Jiten (Encyclopedia of Tobacco) by Tobacco Academic Studies Center, March 31, 2009". For the method of producing the homogenized sheet, that is, the method of grinding tobacco leaves and processing into a homogenized sheet, there are a plurality of conventional methods. The first method involves making a paper sheet by using a papermaking process. The second method involves mixing an appropriate solvent such as water with ground tobacco leaves so as to be uniform, then casting the uniform mixture thinly on a metal plate or metal plate belt, and performing drying to make a cast sheet. The third method involves mixing an appropriate solvent such as water with ground tobacco leaves so as to be uniform and extruding the uniform mixture into a sheet form to make a rolled sheet. Details of the types of the homogenized sheet are disclosed in "Tabako-no-Jiten (Encyclopedia of Tobacco) by Tobacco Academic Studies Center, March 31, 2009".

The water content of the tobacco filler may be 10 wt% to 15 wt% relative to the total amount of the tobacco filler, and is preferably 11 wt% to 13 wt%. Such a water content suppresses the occurrence of a stain on the wrapping paper and improves the machinability during the production of the tobacco rod.

The shredded tobacco contained in the first tobacco filler may have any size and may be prepared by any method. For example, dried tobacco leaves cut to a width of 0.5 mm to 2.0 mm may be used.

When a ground product of the homogenized sheet is used, a product obtained by grinding dried tobacco leaves to an average particle size of about 20 $\mu$m to 200 $\mu$m, homogenizing the ground tobacco, processing the resultant into a sheet, and shredding the sheet to a width of 0.5 mm to 2.0 mm may be used.

The first tobacco filler may contain an aerosol-source material that generates aerosol smoke. The type of the aerosol-source material is not particularly limited, and extracts from various natural products and/or components thereof can be selected depending on the intended use. Examples of the aerosol-source material include glycerol, propylene glycol, triacetin, 1,3-butanediol, and mixtures thereof.

The content of the aerosol-source material in the first tobacco filler is not particularly limited, and to sufficiently generate aerosols and impart a good smoke taste, the content is typically 5 wt% or more, preferably 10 wt% or more, and typically 50 wt% or less, preferably 15 wt% or more and 25 wt% or less, relative to the total amount of the tobacco filler.

The first tobacco filler may contain a flavor. The type of the flavor is not particularly limited, and to impart a good smoke taste, acetanisole, acetophenone, acetylpyrazine, 2-acetylthiazole, alfalfa extract, amyl alcohol, amyl butyrate, transanethole, star anise oil, apple juice, Peru balsam oil, beeswax absolute, benzaldehyde, benzoin resinoid, benzyl alcohol, benzyl benzoate, benzyl phenylacetate, benzyl propionate, 2,3-butanedione, 2-butanol, butyl butyrate, butyric acid, caramel, cardamom oil, carob absolute, β-carotene, carrot juice, L-carvone, β-caryophyllene, cassia bark oil, cedarwood oil, celery seed oil, chamomile oil, cinnamic aldehyde, cinnamic acid, cinnamyl alcohol, cinnamyl cinnamate, citronella oil, DL-citronellol, clary sage extract, cocoa, coffee, cognac oil, coriander oil, cuminaldehyde, davana oil, δ-decalactone, γ-decalactone, decanoic acid, dill herb oil, 3,4-dimethyl-1,2-cyclopentanedione, 4,5-dimethyl-3-hydroxy-2,5-dihydrofuran-2-one, 3,7-dimethyl-6-octenoic acid, 2,3-dimethylpyrazine, 2,5-dimethylpyrazine, 2,6-dimethylpyrazine, ethyl 2-methylbutyrate, ethyl acetate, ethyl butyrate, ethyl hexanoate, ethyl isovalerate, ethyl lactate, ethyl laurate, ethyl levulinate, ethyl maltol, ethyl octanoate, ethyl oleate, ethyl palmitate, ethyl phenylacetate, ethyl propionate, ethyl stearate, ethyl valerate, ethyl vanillin, ethyl vanillin glucoside, 2-ethyl-3,(5 or 6)-dimethylpyrazine, 5-ethyl-3-hydroxy-4-methyl-2(5H)-furanone, 2-ethyl-3-methylpyrazine, eucalyptol, fenugreek absolute, genet absolute, gentian root infusion, geraniol, geranyl acetate, grape juice, guaiacol, guava extract, γ-heptalactone, γ-hexalactone, hexanoic acid, cis-3-hexen-1-ol, hexyl acetate, hexyl alcohol, hexyl phenylacetate, honey, 4-hydroxy-3-pentenoic acid lactone, 4-hydroxy-4-(3-hydroay-1-butenyl)-3,5,5-trimethyl-2-cyclohexen-1-one, 4-(para-hydroxyphenyl)-2-butanone, sodium 4-hydroxyundecanoate, immortelle absolute, β-ionone, isoamyl acetate, isoamyl butyrate, isoamyl phenylacetate, isobutyl acetate, isobutyl phenylacetate, jasmine absolute, kola nut tincture, labdanum oil, terpeneless lemon oil, glycyrrhiza extract, linalool, linalyl acetate, lovage root oil, maltol, maple syrup, menthol, menthone, L-menthyl acetate, para-methoxybenzaldehyde, methyl-2-pyrrolyl ketone, methyl anthranilate, methyl phenylacetate, methyl salicylate, 4'-methylacetophenone, methylcyclopentenolone, 3-methylvaleric acid, mimosa absolute, molasses, myristic acid, nerol, nerolidol, γ-nonalactone, nutmeg oil, δ-octalactone, octanal, octanoic acid, orange flower oil, orange oil, orris root oil, palmitin acid, ω-pentadecalactone, peppermint oil, petitgrain Paraguay oil, phenethyl alcohol, phenethyl phenylacetate, phenylacetic acid, piperonal, plum extract, propenyl guaethol, propyl acetate, 3-propylidene phthalide, prune juice, pyruvic acid, raisin extract, rose oil, rum, sage oil, sandalwood oil, spearmint oil, styrax absolute, marigold oil, tea distillate, α-terpineol, terpinyl acetate, 5,6,7,8-tetrahydroquinoxaline, 1,5,5,9-tetramethyl-13-oxacyclo(8.3.0.0(4.9))tridecane, 2,3,5,6-tetramethylpyrazine, thyme oil, tomato extract, 2-tridecanone, triethyl citrate, 4-(2,6,6-trimethyl-1-cyclohexenyl)2-buten-4-one, 2,6,6-trimethyl-2-cyclohexene-1,4-dione, 4-(2,6,6-trimethyl-1,3-cyclohexadienyl)2-buten-4-one, 2,3,5-trimethylpyrazine, γ-undecalactone, γ-valerolactone, vanilla extract, vanillin, veratraldehyde, violet leaf absolute, N-ethyl-p-menthane-3-carboxamide (WS-3), and ethyl-2-(p-menthane-3-carboxamide) acetate (WS-5) may be used. Menthol is particularly preferred. These flavors may be used alone or in combination of two or more.

The content of the flavor in the first tobacco filler is not particularly limited. To impart a good smoke taste, the content is typically 10000 ppm or more, preferably 20000 ppm or more, more preferably 25000 ppm or more, and typically 70000 ppm or less, preferably 50000 ppm or less, more preferably 40000 ppm or less, still more preferably 33000 ppm or less.

The filling density in the first tobacco filler is not particularly limited. To secure the performance of the first heat-not-burn tobacco and impart a good smoke taste, the filling density is typically 250 mg/cm$^3$ or more, preferably 300 mg/cm$^3$ or more, and typically 400 mg/cm$^3$ or less, preferably 350 mg/cm$^3$ or less.

The first tobacco filler described above is wrapped with the wrapping paper so as to be disposed inside, thereby forming the tobacco rod.


1-2. Second tobacco filler

The second tobacco filler is composed of a plurality of tobacco sheets that are concentrically arranged. As used herein, the phrase "concentrically arranged" means that all the tobacco sheets are arranged such that the centers thereof are substantially in the same position. As used herein, the term "sheet" refers to a shape having a pair of substantially parallel principal surfaces and a pair of substantially parallel side surfaces. The second filler is formed by concentrically winding a plurality of tobacco sheets in a direction orthogonal to the longitudinal direction of the first heat-not-burn tobacco.

Examples of sheet base materials include tobacco materials such as tobacco powder, and, in particular, tobacco materials are preferred. A tobacco sheet formed of a tobacco material base sheet loaded with a component that can generate a flavor as required is preferred.

The tobacco sheet may contain an aerosol-source material that generates aerosol smoke upon heating. An aerosol source such as a polyol such as glycerol, propylene glycol, or 1,3-butanediol is added as an aerosol-source material. The amount of the aerosol-source material added is preferably 5 wt% to 50 wt%, more preferably 15 wt% to 25 wt%, relative to the dry weight of the tobacco sheet.

A tobacco sheet as a material before being concentrically arranged will be described.

The tobacco sheet can be appropriately produced by a known method such as papermaking, slurrying, or rolling. The homogenized sheet described for the first tobacco filler can also be used.

In the case of papermaking, the tobacco sheet can be produced by a method including the following steps.

1) Dried tobacco leaves are coarsely ground and separated into a water extract and a residue by extraction with water.

2) The water extract is concentrated by drying under reduced pressure.

3) Pulp is added to the residue, and the mixture is fiberized with a refiner and then formed into a sheet.

4) A concentrate of the water extract is added to the formed sheet and dried to provide a tobacco sheet. In this case, a step of removing some components such as nitrosamines may be included (see Japanese Unexamined Patent Application Publication (Translation of PCT Application) No. 2004-510422).

In the case of a slurry method, the tobacco sheet can be produced by a method including the following steps.

1) Water, pulp, and a binder are mixed with ground tobacco leaves.

2) The mixture is spread (cast) and dried.

In this case, a step of removing some components such as nitrosamines by irradiating the slurry obtained by mixing water, pulp, and a binder with ground tobacco leaves with ultraviolet rays or X-rays may be included.

Alternatively, as described in International Publication No. 2014/104078, a nonwoven tobacco sheet produced by a method including the following steps may also be used.

1) Powdery and granular tobacco leaves and a binding agent are mixed together.

2) The mixture is sandwiched between nonwoven fabrics.

3) The stack is formed into a certain shape by heat welding to provide a nonwoven tobacco sheet.

The type of raw-material tobacco leaves used in the methods described above may be the same as that described for the first filler.

The composition of the tobacco sheet is not particularly limited, and, for example, the content of the tobacco raw materials (tobacco leaves) is preferably 50 wt% to 95 wt% relative to the total weight of the tobacco sheet. The tobacco sheet may contain a binder, and examples of such a binder include guar gum, xanthan gum, CMC (carboxymethylcellulose), and CMC-Na (sodium salt of carboxymethylcellulose). The amount of binder is preferably 1 wt% to 10 wt% relative to the total weight of the tobacco sheet. The tobacco sheet may further contain other additives. Examples of the additives include fillers such as pulp. The plurality of tobacco sheets used in the present invention may all have the same composition or physical properties, or some or all of the tobacco sheets may have different compositions or physical properties.

The second tobacco filler can be produced by providing a plurality of tobacco sheets having different widths, preparing a stack whose width is reduced from the bottom to the top, and winding the stack by inserting it into a winding tube. According to this production method, the plurality of tobacco sheets extend in the longitudinal direction and are concentrically arranged around the longitudinal axis. A fitting portion extending in the longitudinal direction may be formed between the longitudinal axis and the innermost tobacco sheet.

In this production method, the stack is preferably prepared such that a non-contact portion is formed between adjacent ones of the tobacco sheets after winding.

If there is a non-contact portion (gap) between the plurality of tobacco sheets, where the tobacco sheets are not in contact with each other, a flavor passage can be secured to increase the delivery efficiency of a flavor component. At the same time, since heat from the heater can be transferred to outer tobacco sheets through a contact portion between the plurality of tobacco sheets, high heat transfer efficiency can be ensured.

To provide a non-contact portion between the plurality of tobacco sheets, where the tobacco sheets are not in contact with each other, the stack can be prepared by, for example, using embossed tobacco sheets, performing stacking without bonding together the entire surfaces of adjacent tobacco sheets, performing stacking with adjacent tobacco sheets partially bonded together, or performing stacking with adjacent tobacco sheets entirely or partially bonded together in a light manner such that they are separated after being wound.

When a tobacco rod including wrapping paper is prepared, the wrapping paper may be disposed at the bottom of the stack.

A fitting portion can be formed by forming the second tobacco filler with a cylindrical dummy such as a mandrel placed atop the stack and then removing the dummy.

The thicknesses of the tobacco sheets are not particularly limited, and in terms of the balance between heat transfer efficiency and strength, they are preferably 150 $\mu$m to 1000 $\mu$m, more preferably 200 $\mu$m to 600 $\mu$m. The thicknesses of the tobacco sheets may be the same or different.

The number of tobacco sheets constituting the second tobacco filler is not particularly limited, and may be, for example, two, three, four, five, six, or seven.

1-3. Third tobacco filler

The third tobacco filler is composed of a single folded tobacco sheet. The sheet may be a so-called gathered sheet that has a length comparable to the longitudinal length of the tobacco rod and is loaded as folded multiple times in parallel with the longitudinal direction of the tobacco rod. In terms of the balance between heat transfer efficiency and strength, the thickness of the sheet is preferably 150 $\mu$m to 1000 $\mu$m, more preferably 200 $\mu$m to 600 $\mu$m.

The sheet base material used for the third tobacco filler may be the same as that used for the second tobacco filler.

1-4. Fourth tobacco filler

The fourth tobacco filler is composed of tobacco granules.

Examples of raw materials of the fourth tobacco filler include, but are not limited to, (a) a ground tobacco material, (b) moisture, (c) at least one pH adjuster selected from the group consisting of potassium carbonate and sodium hydrogen carbonate, and (d) at least one binder selected from the group consisting of pullulan and hydroxypropylcellulose.

The ground tobacco material (component (a)) contained in the fourth tobacco filler includes ground tobacco leaves, ground tobacco sheets, and the like. Types of tobacco include burley tobacco, flue-cured tobacco, and oriental tobacco. The tobacco material is preferably ground to a size of 200 $\mu$m to 300 $\mu$m.

A raw material mixture of the fourth tobacco filler contains the ground tobacco material typically in an amount of 20 wt% to 80 wt%.

The moisture (component (b)) contained in the fourth tobacco filler is for maintaining the integrity of the tobacco granules.

The raw material mixture of the fourth tobacco filler contains the moisture typically in an amount of 3 wt% to 13 wt%. The fourth tobacco filler may also contain the moisture typically in such an amount that the weight loss on drying will be 5 wt% to 17 wt%. The weight loss on drying refers to the weight change before and after drying of a sample, the drying being performed in a manner that a portion of the sample is collected for measurement, and the sample is completely dried (e.g., dried at a constant temperature (105°C) for 15 minutes) by evaporating all the moisture in the collected sample. Specifically, it refers to the proportion (wt%) of the sum of the amount of moisture contained in a sample and the amount of volatile component volatilized under the above drying conditions to the weight of the sample. That is, the weight loss on drying (wt%) can be expressed by the following equation.

$$\text{Weight loss on drying (wt\%)} = \{(\text{weight of sample before complete drying}) - (\text{weight of sample after complete drying})\} \times 100/\text{weight of sample before complete drying}$$

The pH adjuster (component (c)) contained in the fourth tobacco filler is composed of potassium carbonate, sodium hydrogen carbonate, or a mixture thereof. The pH adjuster adjusts the pH of the fourth tobacco filler to the alkaline side to facilitate the release of the smoke taste component contained in the fourth tobacco filler from the tobacco granules, thus providing a smoke taste that may be satisfactory to the user.

The raw material mixture of the fourth tobacco filler may contain the pH adjuster typically in an amount of 5 wt% to 20 wt%.

The binder (component (d)) contained in the fourth tobacco filler binds together tobacco granule components to maintain the integrity of the tobacco granules. The binder is composed of pullulan, hydroxypropylcellulose (HPC), or a mixture thereof.

The raw material mixture of the fourth tobacco filler may contain the binder typically in an amount of 0.5 wt% to 15 wt%.

The fourth tobacco filler may consist of the above components (a), (b), (c), and (d), but may further contain additional components.

Examples of the additional components include an aerosol-source material (component (e)). The aerosol-source material generates aerosol smoke. The aerosol-source material is composed of a polyhydric alcohol, and examples of the polyhydric alcohol include glycerol, propylene glycol, sorbitol, xylitol, and erythritol. These polyhydric alcohols may be used alone or in combination of two or more.

When the raw material mixture of the fourth tobacco filler includes an aerosol-source material, it may be contained in an amount of 5 wt% to 15 wt%.

Other examples of the additional components include (f) a flavoring material (solid or liquid) other than smoke taste components. Examples of such flavoring materials include sugar (sucrose, fructose, etc.), cocoa powder, carob powder, coriander powder, licorice powder, orange peel powder, rose hip powder, chamomile flower powder, lemon verbena powder, peppermint powder, leaf powder, spearmint powder, black tea powder, and menthol.

The raw material mixture of the fourth tobacco filler may contain the flavoring material typically in an amount of 0.5 wt% to 30 wt%. The flavoring material may be added to the components (a), (b), (c), (d), and (e) by being directly kneaded with these components, or may be added to these components in such a manner that the flavoring material is accommodated into a known inclusion host compound such as cyclodextrin to prepare an inclusion compound, which is then kneaded with the components.

When the fourth tobacco filler consists of the components (a), (b), (c), (d), and (e), the raw material mixture of the fourth tobacco filler may contain the component (a) typically in an amount of about 33 wt% or more (and about 90 wt% or less).

The fourth tobacco filler is obtained by mixing the components (a), (c), and (d) and optionally the components (e) and (f), adding the component (b) to the mixture and kneading them, granulating the resulting kneaded product with a wet extrusion granulator (into a long columnar shape), and then sizing the granules into a short columnar or spherical shape. The average particle size (D50) of the resulting tobacco granules is typically 0.2 mm to 1.2 mm, preferably 0.2 mm to 1.0 mm, more preferably 0.2 mm to 0.8 mm

In the extrusion granulation, the kneaded product is preferably extruded at a pressure of 2 kN or more at an ambient temperature. As a result of the extrusion at high pressure, the temperature of the kneaded product at the outlet of the extrusion granulator rises rapidly in an instantaneous manner from the ambient temperature to, for example, 90°C to 100°C, and moisture and volatile components evaporate by 2 wt% to 4 wt%. Therefore, the water added to make the kneaded product can be used in an amount larger than the desired amount of moisture in the final product tobacco granules by the amount of evaporation.

The tobacco granules obtained by extrusion granulation may be further dried, if necessary, for moisture control. For example, if the weight loss on drying of the tobacco granules obtained by extrusion granulation is measured to be higher than the desired weight loss on drying (e.g., 5 wt% to 17 wt%), the tobacco granules may be further dried to achieve the desired weight loss on drying. The drying conditions (temperature and time) for achieving the desired weight loss on drying can be set based on predetermined drying conditions (temperature and time) required to reduce the weight loss on drying by a predetermined value.

The fourth tobacco filler may consist solely of the above-described tobacco granules, but may further contain an additional tobacco material. The additional tobacco material is typically made of shreds or fine powder of tobacco leaves. The additional tobacco material can be used in admixture with the tobacco granules of the present invention.

The timing of addition of benzoic acid to the first to fourth tobacco fillers is not particularly limited. Benzoic acid may be added during the production of the tobacco fillers, or may be added after the production of the tobacco fillers.

In addition, the method of adding benzoic acid to the tobacco fillers is not particularly limited.

For example, an addition method involving wrapping a tobacco filler with wrapping paper to form a tobacco rod, followed by inserting a syringe needle into a central portion of the tobacco rod, and jetting a benzoic acid solution into the tobacco filler may be used. According to this addition method, benzoic acid can be uniformly added to the whole of the tobacco filler because the benzoic acid solution permeates throughout the tobacco filler after being jetted.

Alternatively, immediately before the tobacco filler of the above example is wrapped with the wrapping paper, a benzoic acid solution may be applied to the surface of the tobacco filler formed into a rod shape. According to this addition method, benzoic acid can be added to a surface of the tobacco filler that is in contact with the wrapping paper.

Alternatively, for example, a method involving feeding a tobacco material of a tobacco filler to a flavoring machine equipped with a rotating rotor, followed by spraying a benzoic acid solution to the tobacco material under rotational stirring to mix them may be used. According to this addition method, benzoic acid can be uniformly added to the whole of the tobacco filler.

In the above-described addition methods, not only water but also ethanol, propylene glycol, or the like can be used as a solvent for benzoic acid, but water is preferably used from the viewpoint of stable production.

Benzoic acid is insoluble in water at room temperature and soluble in warm water. Thus, to prevent precipitation of benzoic acid dissolved in warm water, the above addition is preferably performed in a state where an aqueous benzoic acid solution is heated. The aqueous benzoic acid solution is preferably heated to a temperature in the range of 75°C to 85°C from the viewpoint of prevention of precipitation of dissolved benzoic acid and prevention of evaporation of water.

2. Wrapping paper

In the first heat-not-burn tobacco, benzoic acid may be added to the wrapping paper.

The configuration of the wrapping paper is not particularly limited and may be a commonly used configuration.

The wrapping paper in the first heat-not-burn tobacco may be composed mainly of pulp. The pulp may be made of wood pulp such as softwood pulp or hardwood pulp, or may be pulp produced by mixing non-wood pulp commonly used for wrapping paper for tobacco articles, such as flax pulp, hemp pulp, sisal pulp, and esparto.

Examples of types of pulp that can be used include chemical pulp, ground pulp, chemiground pulp, and thermomechanical pulp produced by kraft cooking, acidic/neutral/alkaline sulfite cooking, soda chlorine cooking, or the like.

Using the above-described pulp, the texture is arranged to be uniform in a papermaking process using a Fourdrinier paper machine, a cylinder paper machine, a cylinder-tanmo complex paper machine, or the like, thereby producing the wrapping paper. If necessary, a wet paper-strengthening agent may be added to impart water resistance to the wrapping paper, or a sizing agent may be added to adjust the state of printing on the wrapping paper. Furthermore, internal additives for papermaking such as aluminum sulfate, various anionic, cationic, nonionic, or amphoteric yield enhancers, freeness improvers, and paper-strengthening agents, and additives for paper manufacturing such as dyes, pH adjusters, antifoaming agents, pitch control agents, and slime control agents may be added.

The basis weight of a base paper of the wrapping paper in the first heat-not-burn tobacco is, for example, typically 20 gsm or more, preferably 25 gsm or more. On the other hand, the basis weight is typically 65 gsm or less, preferably 50 gsm or less, more preferably 45 gsm or less.

The thickness of the wrapping paper having the above-described characteristics is not particularly limited, and in view of rigidity, air permeability, and ease of adjustment in paper manufacturing, the thickness is typically 10 $\mu$m or more, preferably 20 $\mu$m or more, more preferably 30 $\mu$m or more, and typically 100 $\mu$m or less, preferably 75 $\mu$m or less, more preferably 50 $\mu$m or less.

The shape of the wrapping paper of the heat-not-burn tobacco may be square or rectangle.

When the wrapping paper is used for wrapping a tobacco filler (for producing a tobacco rod), the length of one side may be about 12 mm to 70 mm, and the length of the other side may be 15 mm to 28 mm, preferably 22 mm to 24 mm, more preferably about 23 mm When the tobacco filler is wrapped with the wrapping paper into a columnar shape, for example, an end portion of the wrapping paper in the w direction of Fig. 1 and an end portion on the opposite side are superposed on each other by about 2 mm and glued together, thereby forming a shape of a columnar paper tube, in which the tobacco filler is loaded. The size of the wrapping paper having a rectangular shape can be determined according to the size of the tobacco rod produced.

In the case of wrapping paper for joining and wrapping a tobacco rod and another member adjacent to the tobacco rod, such as a tipping paper, the length of one side may be 20 mm to 60 mm, and the length of the other side may be 15 mm to 28 mm

In addition to the above-described pulp, the wrapping paper according to an embodiment of the present invention may contain a filler. The filler content may be 10 wt% or more and less than 60 wt% relative to the total weight of the wrapping paper according to an embodiment of the present invention, and is preferably 15 wt% or more and 45 wt% or less.

In the wrapping paper according to an embodiment of the present invention, the filler content is preferably 15 wt% or more and 45 wt% or less in the preferred basis weight range (25 gsm or more and 45 gsm or less).

Furthermore, when the basis weight is 25 gsm or more and 35 gsm or less, the filler content is preferably 15 wt% or more and 45 wt% or less, and when the basis weight is more than 35 gsm and 45 gsm or less, the filler content is preferably 25 wt% or more and 45 wt% or less.

As the filler, calcium carbonate, titanium dioxide, kaolin, or the like can be used, and in terms of, for example, improvements in smoke taste and brightness, calcium carbonate is preferably used.

Various auxiliary agents other than the base paper and the filler may be added to the wrapping paper, and, for example, a water resistance improver can be added to improve water resistance. Examples of water resistance improvers include wet paper-strengthening agents (WS agent) and sizing agents. Examples of wet paper-strengthening agents include urea formaldehyde resins, melamine formaldehyde resins, and polyamide epichlorohydrin (PAE). Examples of sizing agents include rosin soap, alkyl ketene dimers (AKD), alkenyl succinic anhydride (ASA), and highly saponified polyvinyl alcohols having a degree of saponification of 90% or more.

A paper-strengthening agent may be added as the auxiliary agent, and examples include polyacrylamide, cationic starch, oxidized starch, CMC, polyamide epichlorohydrin resins, and polyvinyl alcohols. In particular, oxidized starch is known to improve air permeability when used in a very small amount (Japanese Unexamined Patent Application Publication No. 2017-218699).

The wrapping paper may be coated as appropriate.

A coating agent may be added to at least one of the two surfaces, the front surface and the back surface, of the wrapping paper. The coating agent is not particularly limited, and a coating agent capable of forming a film on a surface of paper to reduce liquid permeability is preferred. Examples include alginic acid and salts thereof (e.g., sodium salts), polysaccharides such as pectin, cellulose derivatives such as ethylcellulose, methylcellulose, carboxymethylcellulose, and nitrocellulose, and starch and derivatives thereof (e.g., ether derivatives such as carboxymethyl starch, hydroxyalkyl starch, and cationic starch, and ester derivatives such as starch acetate, starch phosphate, and starch octenyl succinate).

The manner in which benzoic acid is added to the above-described wrapping paper is not particularly limited, but to maintain a good appearance, benzoic acid is preferably added to a surface of the wrapping paper that comes into contact with the tobacco filler when the tobacco filler is wrapped with the wrapping paper. Benzoic acid may be added to the whole or part of the surface of the wrapping paper that comes into contact with the tobacco filler.

The method of adding benzoic acid to the wrapping paper is not particularly limited, and, for example, the heated aqueous benzoic acid solution described above may be sprayed or applied onto the surface of the wrapping paper that comes into contact with the tobacco filler.

3. Mouthpiece member

In the first heat-not-burn tobacco, benzoic acid may be added to the mouthpiece member.

The configuration of the mouthpiece member is not particularly limited as long as it has the function of commonly used filters, and, for example, cellulose acetate tow processed into a cylindrical shape may be used. The single yarn fineness and the total fineness of the cellulose acetate tow are not particularly limited, and in the case of a mouthpiece member having a circumference of 22 mm, the single yarn fineness is preferably 5 g/9000 m to 12 g/9000 m, and the total fineness is preferably 12000 g/9000 m to 35000 g/9000 m. The fibers of the cellulose acetate tow may have a Y-shaped cross-section or an R-shaped cross-section. In the case of a filter filled with cellulose acetate tow, triacetin may be added in an amount of 5 wt% to 10 wt% relative to the weight of the cellulose acetate tow in order to improve filter hardness.

Instead of the acetate filter, a paper filter filled with sheet-like pulp paper may be used.

In the production of the filter, adjustment of airflow resistance and addition of additives (e.g., known absorbents, flavors, and flavor retention materials) can be appropriately designed.

The mouthpiece member may be composed of a single segment or a plurality of segments.

When composed of a plurality of segments, the mouthpiece member may be composed of a support portion and a filter portion or may be composed of a cooling portion, a support portion, and a filter portion. In any embodiment, it is preferred that the support portion be disposed closer to the tobacco filler than the filter portion is and benzoic acid be added to the support portion.

When the mouthpiece member is composed of a cooling portion, a support portion, and a filter portion, these portions may be disposed as described below.

As shown in Fig. 3, a support portion 13a, a cooling portion 13b, and a filter portion 14 may be disposed in this order. As described above, Fig. 3 shows an embodiment where a tobacco rod constituting the first heat-not-burn tobacco 1 is heated from inside thereof with the heater member 105. In this embodiment, since the mouthpiece member 12 is composed of the support portion 13a, the cooling portion 13b, and the filter portion 14 disposed in this order, the support portion 13a is not directly heated by the heater member 105, or the range of direct heating is narrower than that of the tobacco filler 10.

Alternatively, as shown in Fig. 4, the cooling portion 13b, the support portion 13a, and the filter portion 14 may be disposed in this order. As described above, Fig. 4 shows an embodiment where a tobacco rod constituting the first heat-not-burn tobacco 1 is heated from outside thereof with the heater member 105. In this embodiment, since the mouthpiece member 12 is composed of the cooling portion 13b, the support portion 13a, and the filter portion 14 disposed in this order, the support portion 13a is not directly heated by the heater member 105, or the range of direct heating is narrower than that of the tobacco filler 10.

As described above, in the first heat-not-burn tobacco, the support portion is disposed so as not to be directly heated by the heater member serving as a heat source, or disposed such that the range of direct heating is narrower than that of the tobacco filler. Accordingly, when the first heat-not-burn tobacco is heated, the temperature of the support portion becomes lower than the temperature of the tobacco filler. That is, benzoic acid added to the support is less likely to be heated at a temperature close to the boiling point of benzoic acid than when added to the tobacco filler, and does not volatilize early. Therefore, the smoke flavor inhibition can be suppressed throughout the use of one heat-not-burn tobacco from the early stage to the last stage.

Specific examples of the support portion include, but are not limited to, an acetate filter having a hollow portion, that is, a center hole filter.

The method of adding benzoic acid to the mouthpiece member is not particularly limited. For example, when benzoic acid is added to the support portion, the heated aqueous benzoic acid solution described above may be sprayed or applied onto the whole or part of the support portion, or the support portion may be impregnated with the aqueous benzoic acid solution. Benzoic acid may be added during the process of producing the support portion. For example, when the support portion is made of cellulose acetate fibers, benzoic acid may be added together with a plasticizer (e.g., triacetin) or the like added during the process of producing the support portion, and by performing molding after this, a support to which benzoic acid is preliminarily added can be produced.

The configuration of the cooling portion is not particularly limited as long as it has a function of cooling tobacco mainstream smoke, and, for example, thick paper processed into a cylindrical shape may be used. In this case, the inside of the cylinder is a cavity, and steam containing an aerosol-source material and a tobacco flavor component comes into contact with the air in the cavity to be cooled.

The cooling portion may have a perforation for taking in outside air. The presence of such a perforation allows air to flow from outside into the cooling portion during use, and as a result, steam generated upon heating of the tobacco rod and containing an aerosol-source material and a tobacco flavor component comes into contact with the air from outside to be cooled and liquefied, thus promoting the generation of aerosols. The number of perforations is not particularly limited and may be two or more.

The diameter of the perforation is preferably 100 μm to 1000 μm, more preferably 300 μm to 800 μm. The perforation is preferably substantially circular or substantially elliptic, and when it is substantially elliptic, the diameter means the major diameter.

4. Holder for tobacco filler

The second and third heat-not-burn tobaccos each include a holder for the tobacco filler.

The configuration of the holder is not particularly limited as long as it has a function of holding the tobacco filler, and, for example, as shown in Fig. 2, a cup-shaped member having a side wall and a bottom plate and being opened on the opposite side of the bottom plate may be used. The holder may also have a plurality of protrusions (not illustrated) on a surface of the side wall that comes into contact with the tobacco filler.

The shape of the bottom plate is not limited and may be, for example, polygonal, rounded polygonal, circular, or elliptic. The width is the diameter when the bottom plate is circular, the major diameter when the bottom surface is elliptic, and the diameter of a circumscribed circle or the major diameter of a circumscribed ellipse when the bottom plate is polygonal or rounded polygonal. The length orthogonal to the width is the height.

In Fig. 2, the holder has such a shape that the side wall tapers from the bottom plate toward the opening, but may have other shapes such as a cylindrical shape.

The size of the holder is not particularly limited, and in general, the width of the bottom plate is 3 mm to 10 mm, preferably 4 mm to 8 mm, and the height of the bottom plate is 5 mm to 20 mm, preferably 7 mm to 12 mm The thickness of the side wall is, for example, about 0.1 mm to 0.3 mm The thickness of the bottom plate is preferably larger than the thickness of the side wall, and is, for example, 0.3 mm to 1.0 mm, preferably 0.4 mm to 1.0 mm

The material of the holder is not particularly limited and may be a metal material such as stainless steel or a material containing pulp and a binder.

For the production of the holder, when a metal material is used, the holder can be integrally molded into a desired shape by, for example, plastic working, and when a material containing pulp and a binder is used, the holder can be integrally molded into a desired shape by, for example, injection molding or wet molding.

5. Aerosol-source material

The first and second heat-not-burn tobaccos each include an aerosol-source material in the tobacco filler.

The third heat-not-burn tobacco may further include an aerosol-source material. In this embodiment, the third heat-not-burn tobacco includes a tobacco filler, a holder for the tobacco filler, and an aerosol-source material, and the aerosol-source material is not included in the tobacco filler.

The type of the aerosol-source material is not particularly limited, and extracts from various natural products and/or components thereof can be selected depending on the intended use. Examples of the aerosol-source material include glycerol, propylene glycol, triacetin, 1,3-butanediol, and mixtures thereof.

The content of the aerosol-source material in the third heat-not-burn tobacco is not particularly limited, and to sufficiently generate aerosols and provide a good smoke taste, it is typically 300 wt% or more, preferably 320 wt% or more, and typically 400 wt% or less, preferably 375 wt% or less, relative to the total amount of the tobacco filler of the third heat-not-burn tobacco.

<Heated tobacco product>

Heated tobacco products can be classified into products that use electricity to heat tobacco fillers of heat-not-burn tobaccos (hereinafter also referred to as "electrically heated tobacco products") and products that use combustion-type heat sources to heat tobacco fillers of heat-not-burn tobaccos (hereinafter also referred to as "heated tobacco products that use combustion-type heat sources"). Each heated tobacco product will be described below in detail.

<Electrically heated tobacco product>

An electrically heated tobacco product according to a first embodiment includes: an electrically heating device including a heater member, a battery unit that serves as a power source for the heater member, and a control unit for controlling the heater member; and the first heat-not-burn tobacco configured to be inserted so as to be in contact with the heater member.

Examples of modes of the electrically heated tobacco product according to the first embodiment include a mode in which heating is performed from inside the tobacco rod of the first heat-not-burn tobacco, as shown in Fig. 3 (hereinafter also referred to as an "internal-heating-type electrically heated tobacco product") and a mode in which the outer peripheral surface of the first heat-not-burn tobacco is heated, as shown in Fig. 4 (hereinafter also referred to as an "external-heating-type electrically heated tobacco product").

Hereinafter, the electrically heated tobacco product according to the first embodiment will be described with reference to Fig. 3.

An electrically heated tobacco product (first embodiment) 100 is used in such a manner that the first heat-not-burn tobacco 1 is inserted so as to be in contact with the heater member 105 disposed in an electrically heating device 101.

The electrically heating device 101 has a battery unit 103 and a control unit 104 inside a body 102 made of, for example, resin.

When the first heat-not-burn tobacco 1 is inserted into the electrically heating device 101, the tobacco filler 10 of the tobacco rod first comes into contact with the heater member 105, and then the heater member 105 is entirely inserted into the tobacco filler 10.

The heater member 105 of the electrically heating device 101 generates heat under the control of the control unit 104. The heat is conducted to the tobacco filler 10 of the first heat-not-burn tobacco 1, as a result of which the aerosol-source material, the smoke taste component, and the like contained in the tobacco filler 10 volatilize.

The heater member 105 of the electrically heating device 101 may be, for example, a sheet-like heater, a plate-like heater, or a tubular heater. The sheet-like heater is a flexible sheet-shaped heater, and examples thereof include a heater including a film (about 20 $\mu$m to 225 $\mu$m in thickness) of a heat-resistant polymer such as polyimide. The plate-like heater is a rigid plate-shaped heater (about 200 $\mu$m to 500 $\mu$m in thickness), and examples thereof include a heater including a flat substrate having a resistance circuit thereon and using this portion as a heat generating portion. The tubular heater is a hollow or solid tube-shaped heater, and examples thereof include a heater (about 200 $\mu$m to 500 $\mu$m in thickness) including a tube made of metal or the like having a resistance circuit on the outer peripheral surface thereof and using this portion as a heat generating portion. Alternatively, a columnar heater or a conical heater made of metal or the like having a resistance circuit therein and using this portion as a heat generating portion may be used. The cross-sectional shape of the tubular heater may be, for example, circular, elliptic, polygonal, or rounded polygonal.

In the case of an internal-heating-type electrically heated tobacco product as shown in Fig. 3, the plate-like heater, the columnar heater, or the conical heater described above can be used. In the case of an external-heating-type electrically heated tobacco product as shown in Fig. 4, the sheet-like heater, the plate-like heater, or the tubular heater described above can be used.

The longitudinal length of the heater member can be within the range of L $\pm$ 5.0 mm, where L is the longitudinal length (mm) of the tobacco rod composed of the tobacco filler and the wrapping paper.

The heating strength of the heater member, such as the time and temperature of heating the first heat-not-burn tobacco, can be set in advance for each electrically heated tobacco product. For example, the heating strength can be set in advance such that after the first heat-not-burn tobacco is inserted into the electrically heating device, preheating is performed for a certain period of time until the temperature of at least part of the tobacco filler of the first heat-not-burn tobacco reaches X (°C), after which the temperature is kept at a constant temperature of X (°C) or lower.

From the viewpoint of aerosol delivery, X (°C) is preferably 150°C or higher and 450°C or lower. Specifically, X (°C) may be 150°C, 160°C, 170°C, 180°C, 190°C, 200°C, 210°C, 220°C, 230°C, 240°C, 250°C, 260°C, 270°C, 280°C, 290°C, 300°C, 310°C, 320°C, 330°C, 340°C, 350°C, 360°C, 370°C, 380°C, 390°C, 400°C, 410°C, 420°C, 430°C, 440°C, or 450°C.

In the first embodiment of the electrically heated tobacco product, steam generating from the tobacco filler of the first heat-not-burn tobacco upon heating with the heater member and containing an aerosol-source material, a smoke taste component, and the like reaches the user's oral cavity through the mouthpiece member composed of the support portion, the filter portion, and the like.

An electrically heated tobacco product according to a second embodiment includes: an electrically heating device including a heater member, a battery unit that serves as a power source for the heater member, a control unit for controlling the heater member, and a mouthpiece; and the third heat-not-burn tobacco.

Examples of the electrically heated tobacco product according to the second embodiment include an electrically heated tobacco product (second embodiment) as shown in Fig. 6.

Hereinafter, the electrically heated tobacco product according to the second embodiment will be described with reference to Fig. 6.

Fig. 6 is a sectional view of an electrically heated tobacco product (second embodiment) 300 cut in its longitudinal direction. An electrically heating device 301 includes a heater member 305, a battery unit 303, a control unit 304, and a mouthpiece 306, and is structured such that at least a portion of the third heat-not-burn tobacco 2 can be disposed in a body 302 of the electrically heating device 301.

The third heat-not-burn tobacco 2 may be disposed so as to be or not to be in contact with the heater member 305.

When the third heat-not-burn tobacco 2 is disposed so as to be in contact with the heater member 305, upon heating with the heat generated from the heater member 305, steam containing an aerosol-source material, a smoke taste component, and the like generates from the tobacco filler 10 of the third heat-not-burn tobacco 2.

When the third heat-not-burn tobacco 2 is disposed so as not to be in contact with the heater member 305, the third heat-not-burn tobacco 2 further includes an aerosol-source material (not illustrated). In this case, the aerosol-source material is not included in the tobacco filler 10. Upon heating with the heat generated from the heater member 305, the aerosol-source material becomes aerosol smoke, and the aerosol smoke heats the tobacco filler 10, whereby steam containing a smoke taste component and the like generates.

The temperature at which the tobacco filler 10 of the third heat-not-burn tobacco 2 is heated with the electrically heating device 301 is lower than 150°C and may be 140°C or lower, 130°C or lower, or 120°C or lower, and is typically 22°C or higher and may be 30°C or higher or 40°C or higher.

If the temperature at which the tobacco filler is heated is within the above range, benzoic acid in the tobacco filler will not volatilize early, so that the effect of suppressing the smoke flavor inhibition due to benzoic acid can be produced throughout the use of one heat-not-burn tobacco from the early stage to the last stage.

<Heated tobacco product that uses combustion-type heat source>

A heated tobacco product that uses a combustion-type heat source according to an embodiment includes: a heating device including a tubular holding member extending from an ignition end to a non-ignition end and a combustion-type heat source provided at the ignition end; and the second heat-not-burn tobacco disposed in the holding member so as to be closer to the non-ignition end than the combustion-type heat source is.

Examples of the heated tobacco product that uses a combustion-type heat source include a heated tobacco product that uses a combustion-type heat source as shown in Fig. 5.

Hereinafter, the heated tobacco product that uses a combustion-type heat source will be described with reference to Fig. 5.

Fig. 5 is a sectional view of a heated tobacco product 200 that uses a combustion-type heat source cut in its longitudinal direction. A heating device 201 includes a tubular holding member 202 extending from an ignition end to a non-ignition end and a combustion-type heat source 205 provided on the ignition end side, and is structured such that the second heat-not-burn tobacco 2 can be disposed in the holding member 202 so as to be closer to the non-ignition end than the combustion-type heat source is.

A thermally conductive member 203 for the combustive heat source may be provided between the holding member 202 and the second heat-not-burn tobacco 2, and in this case, heat from the combustion-type heat source 205 is conducted to the second heat-not-burn tobacco 2 also via the thermally conductive member 203.

Furthermore, a filter 204 may be provided on the non-ignition end side of the holding member 202.

The combustion-type heat source 205 has a columnar shape extending in a direction from the ignition end toward the non-ignition end, as shown in Fig. 5. The combustion-type heat source 205 has a longitudinal cavity 206. The longitudinal cavity 206 extends through the combustion-type heat source 205 in a direction from the ignition end toward the non-ignition end. Since the longitudinal cavity 206 extends through the combustion-type heat source 205, the tobacco filler constituting the heat-not-burn tobacco 2 is heated due to convection heat transfer. As a result of this heating, steam containing an aerosol-source material, a smoke taste component, and the like generates from the tobacco filler.

The longitudinal cavity 206 is preferably provided, in its transverse section, substantially at the center of the combustion-type heat source 205.

The combustion-type heat source 205 may be provided, on its end surface on the ignition end side, with a groove (not illustrated) that communicates with the longitudinal cavity 206. The groove may be exposed to the side surface of the combustion-type heat source 205. The groove is preferably provided such that two grooves intersect at right angles on the end surface on the ignition end side. The width of the groove may be 0.3 mm to 0.8 mm, and the depth of the groove may be about 2.0 mm to 4.0 mm

The combustion-type heat source 205 may have a cylindrical or polygonal columnar shape.

The combustion-type heat source 205 is made of a combustible material. The combustible material is, for example, a mixture containing a carbon material, an incombustible additive, a binder (an organic binder or an inorganic binder), and water. The carbon material for use is preferably one from which volatile impurities have been removed by heat treatment or the like.

The combustion-type heat source 205 is partially fitted into the second heat-not-burn tobacco 2, with the combustion-type heat source 205 and the tobacco filler constituting the second heat-not-burn tobacco 2 being not in contact with each other. A binder (e.g., sodium carboxymethylcellulose) may be applied to a part of the inner surface of the side wall 16 constituting the second heat-not-burn tobacco 2, for example, one or more points, preferably two points, in the vicinity of the opening, to thereby bond the combustion-type heat source 205 and the second heat-not-burn tobacco 2 together. By bonding them together, the combustion-type heat source 205 can be prevented from coming off from the second heat-not-burn tobacco 2.

Through the heating with the heating device, at least part of the tobacco filler is heated at 150°C or higher in the second heat-not-burn tobacco. From the viewpoint of aerosol delivery, the heating temperature is preferably 200°C or higher, more preferably 250°C or higher, and is typically 400°C or lower.

<Method of measuring benzoic acid concentration in addition object>

The concentration of benzoic acid added to the addition object can be measured, for example, using a method described in "The Analytical Methods of Food Additives in Food, 2nd edition" published by the Ministry of Health, Labour and Welfare.

Specifically, benzoic acid contained in an addition object is extracted and purified by steam distillation, and then the concentration of the benzoic acid is quantitatively determined by using a liquid chromatograph equipped with an ultravioletvisible absorptiometer as a detector.

<Suctiontest>

In the electrically heated tobacco products described above, a suction test of the first heat-not-burn tobacco is conducted under the following conditions.

When the internal-heating-type electrically heated tobacco product is used, the heater temperature is increased to 340°C after the tobacco rod of the first heat-not-burn tobacco is inserted into the electrically heating device. Thereafter, automatic suction is performed using a single-port automatic suction machine manufactured by Borgwaldt under the conditions of a flow rate of 55 cc/2 seconds and a suction interval of 30 seconds. Mainstream smoke generated during the suction test is collected on a Cambridge filter pad, and the Cambridge filter pad is removed after at least 14 puffing operations.

When the external-heating-type electrically heated tobacco product is used, the heater temperature is increased to 240°C after the tobacco rod of the first heat-not-burn tobacco is inserted into the electrically heating device. Thereafter, automatic suction is performed using a single-port automatic suction machine manufactured by Borgwaldt under the conditions of a flow rate of 55 cc/2 seconds and a suction interval of 30 seconds. Mainstream smoke generated during the suction test is collected on a Cambridge filter pad, and the Cambridge filter pad is removed after at least eight puffing operations.

<Method of measuring temperature during suction test of heat-not-burn tobacco>

In the electrically heated tobacco products described above, the temperature of the tobacco filler at this time when the first heat-not-burn tobacco is heated is measured with a thermocouple (model TI-SP-K manufactured by Toa Electric Inc.) being inserted into or attached to a desired measurement location of the tobacco rod. When the thermocouple is attached, polyimide tape (50 μm in thickness) is cut and used.

After the first heat-not-burn tobacco with the thermocouple inserted or attached is inserted into the electrically heating device, the temperature change over time at the desired measurement location is measured and recorded under the heater temperature in the above <Suction test>.

EXAMPLES

The present invention will be described more specifically with reference to Examples, but the present invention is not limited by the description of the following Examples without departing from the spirit thereof.

<Preparation of heat-not-burn tobacco>

[Production of first heat-not-burn tobacco]

Two types of first heat-not-burn tobaccos were produced: those used with an electrically heating device of a type which performs heating from inside with a heater member inserted into a tobacco filler constituting a tobacco rod (hereinafter also referred to as "internal-heating-type heat-not-burn tobaccos") and those used with an electrically heating device of a type which performs heating from outside with a heater member in contact with the outer peripheral surface of a tobacco rod (hereinafter referred to as "external-heating-type heat-not-burn tobaccos").

The internal-heating-type heat-not-burn tobaccos were each produced in the following manner.

Tobacco sheets pre-incorporated with 20 g/100 g of an aerosol-source material (glycerol) were provided. Three of the tobacco sheets were concentrically arranged and wound to form a tobacco filler. The tobacco filler was wrapped with wrapping paper (manufactured by Nippon Paper Papylia Co., Ltd., basis weight: 35 gsm, thickness: 52 $\mu$m) to produce a tobacco rod. The tobacco filler had a weight of 0.8 g, and the tobacco rod had a circumference of 22 mm and a length of 68 mm

The tobacco rod was cut to a length of 12 mm The cut tobacco rod, a support portion composed of a center hole filter having a through hole with a length of 8 mm, a cooling portion formed of a 28-mm length paper tube provided with perforations in its outer peripheral surface, and a filter portion filled with cellulose acetate fibers with a length of 7 mm were wrapped with a tipping paper by hand.

Thereafter, a syringe needle (Terumo Corporation, Terumo Syringe (registered trademark)) was inserted into a central portion of the tobacco filler, and benzoic acid was added by jetting an aqueous benzoic acid solution heated to 80°C.

Through the addition of benzoic acid, samples having benzoic acid concentrations in the tobacco filler of 2500 ppm (Example 1), 5000 ppm (Example 2), and 10000 ppm (Example 3) were prepared.

In addition, a sample was prepared without performing the addition of benzoic acid (Comparative Example 1).

The external-heating-type heat-not-burn tobaccos were each produced in the following manner.

Tobacco sheet shreds were put into a flavoring machine equipped with a rotating rotor, and benzoic acid was added by spraying an aqueous benzoic acid solution heated to 70°C under rotational stirring. The resulting tobacco sheet shreds were mixed with 15 g/100 g of an aerosol-source material (glycerol) to provide a tobacco filler. Using a high-speed winding machine, the tobacco filler was wound up with wrapping paper (manufactured by Nippon Paper Papylia Co., Ltd., basis weight: 35 gsm, thickness: 52 $\mu$m) to form a tobacco rod. The shred weight per tobacco rod was 0.8 g, and the tobacco rod had a circumference of 22 mm and a length of 68 mm

Thereafter, a syringe needle (Terumo Corporation, Terumo Syringe (registered trademark)) was inserted into a central portion of the tobacco filler, and 2 g/100 g of a flavor was added by jetting.

The tobacco rod was cut to a length of 20 mm The cut tobacco rod, a cooling portion formed of a 20-mm length paper tube provided with perforations in its outer peripheral surface, a support portion composed of a center hole filter having a through hole with a length of 8 mm, and a filter portion filled with cellulose acetate fibers with a length of 7 mm were wrapped with a tipping paper by hand.

Through the addition of benzoic acid, samples having benzoic acid concentrations in the tobacco filler of 2000 ppm (Example 4), 4000 ppm (Example 5), and 6000 ppm (Example 6) were prepared. In addition, a sample was prepared without performing the addition of benzoic acid (Comparative Example 2).

Furthermore, a sample in which methyl benzoate was added in place of benzoic acid (methyl benzoate concentration in the tobacco filler: 6000 ppm) (Comparative Example 3) and a sample in which sodium benzoate was added (sodium benzoate concentration in the tobacco filler: 6000 ppm) (Comparative Example 4) were prepared.

[Production of third heat-not-burn tobacco]

Third heat-not-burn tobaccos were each produced in the following manner.

Tobacco granules sieved to an average particle size (D50) of 0.2 mm to 0.7 mm were put into a flavoring machine equipped with a rotating rotor, and an aqueous benzoic acid solution heated to 75°C was added by spraying under rotational stirring to provide a tobacco filler. The tobacco filler was then loaded into a holder. The weight of the tobacco filler per holder was 350 mg. The holder used was a cup-shaped holder constituted by a bottom plate and a side wall and having an opening on the opposite side of the bottom plate. The holder was produced by loading a slurry of a material containing pulp (needle-leaved tree bleached kraft pulp (NBKP)) and a binder (CMC) into a middle plate, performing pressing, and then performing drying. In the holder used, the bottom plate was circular and had a diameter of 8.85 mm and a thickness of 0.8 mm, and the side wall had a height of 22.9 mm and a thickness of 0.8 mm

Through the opening of the holder, a syringe needle (Terumo Corporation, Terumo Syringe (registered trademark)) capable of radially jetting a liquid was inserted into a central portion of the tobacco filler, and 8 g/100 g of a flavor was added by jetting.

A mixture of 700 mg of glycerol and 300 mg of propylene glycol was prepared as an aerosol-source material, and the mixture was loaded into a container equipped with a heater member.

The holder loaded with the tobacco filler and the container loaded with the aerosol-source material were connected together to produce a third heat-not-burn tobacco.

Through the addition of benzoic acid, samples having benzoic acid concentrations in the tobacco filler of 2500 ppm (Example 7), 5000 ppm (Example 8), and 10000 ppm (Example 9) were prepared. In addition, a sample was prepared without performing the addition of benzoic acid (Comparative Example 5).

<Measurement of temperature of addition object during suction test of heat-not-burn tobacco>

When the internal-heating-type electrically heated tobacco products were used, a thermocouple (model TI-SP-K manufactured by Toa Electric Inc.) was inserted into or attached to the following three locations (1) to (3) of the tobacco rod of the first heat-not-burn tobacco, and the temperature of each measurement location was measured. For the attachment of the thermocouple, polyimide tape (50 $\mu$m in thickness) was cut and used.

(1) A layer of the tobacco filler that is in contact with the heater member
(2) A layer of the tobacco filler that is in contact with the wrapping paper
(3) A surface of the wrapping paper that is in contact with the tobacco filler

The first heat-not-burn tobacco equipped with the above thermocouple was inserted into an electrically heating device, and the temperature change over time at the measurement locations (1) to (3) was measured and recorded under the described conditions of the above suction test. The results are shown in Fig. 7.

When the external-heating-type electrically heated tobacco products were used, a thermocouple (model TI-SP-K manufactured by Toa Electric Inc.) was inserted into or attached to the following two locations (4) and (5) of the tobacco rod of the first heat-not-burn tobacco, and the temperature of each measurement location was measured. For the attachment of the thermocouple, polyimide tape (50 $\mu$m in thickness) was cut and used.

(4) A central portion of the tobacco filler
(5) A surface of the tobacco filler that is in contact with the wrapping paper

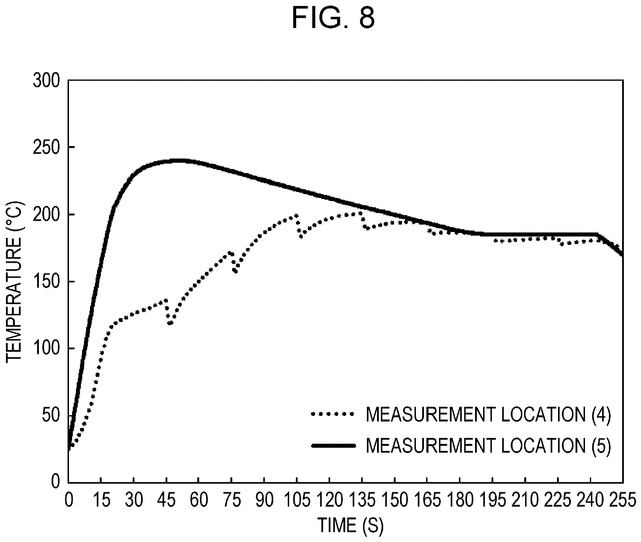

The first heat-not-burn tobacco equipped with the above thermocouple was inserted into an electrically heating device, and the temperature change over time at the measurement locations (4) and (5) was measured and recorded under the described conditions of the above suction test. The results are shown in Fig. 8.

<Sensory test during use of internal-heating-type heat-not-burn tobacco>

For Examples 1 to 3 and Comparative Example 1, a sensory test of the smoke flavor inhibition at the early stage, the middle stage, and the last stage of the use of each internal-heating-type heat-not-burn tobacco was conducted by three panelists.

The first heat-not-burn tobacco was inserted into an electrically heating device, and suction was started after the heater temperature was increased to 340°C. The first to fourth puffs were defined as the early stage, the fifth to eighth puffs as the middle stage, and the ninth to twelfth puffs as the last stage.

After the suction of each internal-heating-type heat-not-burn tobacco, the three panelists discussed and conducted an evaluation according to the following evaluation criteria. The evaluation results are shown in Table 1.

(Evaluation criteria)

0: The smoke flavor inhibition is not felt.
1: The smoke flavor inhibition is slightly felt.
2: The smoke flavor inhibition is weakly felt.
3: The smoke flavor inhibition is moderately felt.
4: The smoke flavor inhibition is strongly felt.

[Table 1]

| | Amount of benzoic acid added (ppm) | Evaluation | | |
|---|---|---|---|---|
| | | Early stage (1st to 4th puffs) | Middle stage (5th to 8th puffs) | Last stage (9th to 12th puffs) |
| Comparative Example | 0 | 3 | 4 | 4 |
| 1 | | | | |
| Example 1 | 2500 | 1 | 2 | 3 |
| Example 2 | 5000 | 0 | 1 | 2 |
| Example 3 | 10000 | 0 | 0 | 1 |

<Sensory test during use of external-heating-type heat-not-burn tobacco>

[Suppression of smoke flavor inhibition by benzoic acid]

For Examples 4 to 6 and Comparative Example 2, a sensory test of the smoke flavor inhibition during the use of each external-heating-type heat-not-burn tobacco was conducted by six panelists.

The first heat-not-burn tobacco was inserted into an electrically heating device, and suction was started after a certain period of time from the increase of the heater temperature to 240°C. The first to sixth puffs were defined as the early stage of the use, and the seventh to twelfth puffs as the last stage of the use.

After the suction of each internal-heating-type heat-not-burn tobacco, the six panelists discussed and evaluated Examples 4 to 6 relative to Comparative Example 2 according to the following criteria. The evaluation results are shown in Table 2.

(Evaluation criteria)

1: The smoke flavor inhibition is sufficiently suppressed as compared with Comparative Example 2.
2: The smoke flavor inhibition is suppressed as compared with Comparative Example 2.
3: The smoke flavor inhibition is somewhat suppressed as compared with Comparative Example 2.

[Table 2]

| | Amount of benzoic acid added (ppm) | Evaluation | |
|---|---|---|---|
| | | Early stage (1st to 6th puffs) | Last stage (7th to 12th puffs) |
| Comparative Example 2 | 0 | - | - |
| Example 4 | 2000 | 3 | 3 |
| Example 5 | 4000 | 1 | 2 |
| Example 6 | 6000 | 1 | 1 |

[Suppression of smoke flavor inhibition by methyl benzoate and sodium benzoate]

For Comparative Example 3 and 4, a sensory test of the smoke flavor inhibition during the use of each external-heating-type heat-not-burn tobacco was conducted by three panelists.

The first heat-not-burn tobacco was inserted into an electrically heating device, and suction was started after a certain period of time from the increase of the heater temperature to 240°C.

After the suction of each internal-heating-type heat-not-burn tobacco, the three panelists discussed but could not sufficiently evaluate the suppression of the smoke flavor inhibition for both Comparative Examples 3 and 4 because of strong chemical odor. The chemical odor refers to a chemical smell, which is a smell unpleasant for humans to inhale.

<Sensory test during use of third heat-not-burn tobacco>

For Examples 7 to 9 and Comparative Example 5, a sensory test of the smoke flavor inhibition during the use of each third heat-not-burn tobacco was conducted by eleven panelists.

The third heat-not-burn tobacco was inserted into an electrically heating device, and suction was started after a certain period of time from the increase of the heater temperature to 40°C.

After the suction of each internal-heating-type heat-not-burn tobacco, the eleven panelists discussed and evaluated Examples 7 to 9 relative to Comparative Example 5 according to the following criteria. The evaluation results are shown in Table 3.

(Evaluation criteria)

1: The smoke flavor inhibition is sufficiently suppressed as compared with Comparative Example 5.
2: The smoke flavor inhibition is suppressed as compared with Comparative Example 5.

[Table 3]

|  | Amount of benzoic acid added (ppm) | Evaluation |
| --- | --- | --- |
| Comparative Example 5 | 0 | - |
| Example 7 | 2500 | 2 |
| Example 8 | 5000 | 1 |
| Example 9 | 10000 | 1 |

Reference Signs List

1       first heat-not-burn tobacco
2       second and third heat-not-burn tobaccos
10      tobacco filler
11      wrapping paper
12      mouthpiece member
13a     support portion
13b     cooling portion
14      filter portion
15      holder
16      side wall
17      bottom plate
100     electrically heated tobacco product (first embodiment)
101     electrically heating device
102     body
103     battery unit
104     control unit
105     heater member
200     heated tobacco product that uses combustion-type heat source
201     heating device
202     holding member
203     thermally conductive member
204     filter
205     combustion-type heat source
206     longitudinal cavity
300     electrically heated tobacco product (second embodiment)
301     electrically heating device

302     body
303     battery unit
304     control unit
305     heater member
306     mouthpiece

**Claims**

1.  A heat-not-burn tobacco comprising a tobacco filler, wrapping paper that wraps the tobacco filler, and a mouthpiece member,

    wherein in the heat-not-burn tobacco, at least part of the tobacco filler is heated at 150°C or higher,
    the tobacco filler includes an aerosol-source material, and
    benzoic acid is added to at least one of the tobacco filler, the wrapping paper, and the mouthpiece member such that a concentration in the addition object to which the benzoic acid is added is 100 ppm or more and 10000 ppm or less.

2.  The heat-not-burn tobacco according to Claim 1, wherein the benzoic acid is added to a portion of the addition object that is heated to 150°C or higher and 250°C or lower when the heat-not-burn tobacco is heated.

3.  The heat-not-burn tobacco according to Claim 1 or 2, wherein the benzoic acid is added to the tobacco filler.

4.  The heat-not-burn tobacco according to any one of Claims 1 to 3, wherein the mouthpiece member includes at least a support portion and a filter portion, the support portion is disposed closer to the tobacco filler than the filter portion is, and the benzoic acid is added to the support portion.

5.  The heat-not-burn tobacco according to any one of Claims 1 to 4, wherein the tobacco filler is composed of a composition further containing shredded tobacco or ground tobacco.

6.  The heat-not-burn tobacco according to any one of Claims 1 to 4, wherein the tobacco filler is composed of a tobacco sheet.

7.  The heat-not-burn tobacco according to any one of Claims 1 to 4, wherein the tobacco filler is composed of tobacco granules.

8.  The heat-not-burn tobacco according to any one of Claims 1 to 7, wherein the benzoic acid is added such that a concentration in the addition object is 2000 ppm or more and less than 5000 ppm.

9.  The heat-not-burn tobacco according to any one of Claims 1 to 7, wherein the benzoic acid is added such that a concentration in the addition object is 5000 ppm or more and 10000 ppm or less.

10. An electrically heated tobacco product comprising:

    an electrically heating device including a heater member, a battery unit that serves as a power source for the heater member, and a control unit for controlling the heater member; and
    the heat-not-burn tobacco according to any one of Claims 1 to 9, the heat-not-burn tobacco being configured to be inserted so as to be in contact with the heater member.

11. A heat-not-burn tobacco comprising a tobacco filler and a holder for the tobacco filler,

    wherein in the heat-not-burn tobacco, at least part of the tobacco filler is heated at 150°C or higher,
    the tobacco filler includes an aerosol-source material, and
    benzoic acid is added to the tobacco filler such that a concentration in the tobacco filler is 100 ppm or more and 10000 ppm or less.

12. The heat-not-burn tobacco according to Claim 11, wherein the benzoic acid is added to a portion of the tobacco filler that is heated to 150°C or higher and 250°C or lower when the heat-not-burn tobacco is heated.

13. The heat-not-burn tobacco according to Claim 11 or 12, wherein the tobacco filler is composed of a composition further containing shredded tobacco or ground tobacco.

14. The heat-not-burn tobacco according to Claim 11 or 12, wherein the tobacco filler is composed of a tobacco sheet.

15. The heat-not-burn tobacco according to Claim 11 or 12, wherein the tobacco filler is composed of tobacco granules.

16. The heat-not-burn tobacco according to any one of Claims 11 to 15, wherein the benzoic acid is added such that a concentration in the tobacco filler is 2000 ppm or more and less than 5000 ppm.

17. The heat-not-burn tobacco according to any one of Claims 11 to 15, wherein the benzoic acid is added such that a concentration in the tobacco filler is 5000 ppm or more and 10000 ppm or less.

18. A heated tobacco product that uses a combustive heat source, the heated tobacco product comprising:

a heating device including a tubular holding member extending from an ignition end to a non-ignition end and the combustive heat source provided at the ignition end; and
the heat-not-burn tobacco according to any one of Claims 11 to 17, the heat-not-burn tobacco being disposed in the holding member so as to be closer to the non-ignition end than the combustive heat source is.

19. A heat-not-burn tobacco comprising a tobacco filler and a holder for the tobacco filler,

wherein in the heat-not-burn tobacco, the tobacco filler is heated at a temperature of lower than 150°C, and benzoic acid is added to the tobacco filler such that a concentration in the tobacco filler is 100 ppm or more and 10000 ppm or less.

20. The heat-not-burn tobacco according to Claim 19, further comprising an aerosol-source material.

21. The heat-not-burn tobacco according to Claim 20, wherein the tobacco filler is composed of a composition containing shredded tobacco or ground tobacco.

22. The heat-not-burn tobacco according to Claim 20, wherein the tobacco filler is composed of a tobacco sheet.

23. The heat-not-burn tobacco according to Claim 20, wherein the tobacco filler is composed of tobacco granules.

24. The heat-not-burn tobacco according to any one of Claims 20 to 23, wherein the benzoic acid is added such that a concentration in the tobacco filler is 2500 ppm or more and less than 5000 ppm.

25. The heat-not-burn tobacco according to any one of Claims 20 to 23, wherein the benzoic acid is added such that a concentration in the tobacco filler is 5000 ppm or more and 10000 ppm or less.

26. An electrically heated tobacco product comprising:

an electrically heating device including a heater member, a battery unit that serves as a power source for the heater member, a control unit for controlling the heater member, and a mouthpiece; and
the heat-not-burn tobacco according to any one of Claims 20 to 25.

# FIG. 1

# FIG. 2

# FIG. 3

# FIG. 4

100

103    102    101    10    11    1

13b  13a    14

12

104    105

# FIG. 5

200

205 206  10  2  203    202    204    201

IGNITION END          NON-IGNITION END

PREDETERMINED DIRECTION

# FIG. 6

300

305   2                    302              301

306   10          304          303

# FIG. 7

——— MEASUREMENT LOCATION (1)
·········· MEASUREMENT LOCATION (2)
- - - - MEASUREMENT LOCATION (3)

TEMPERATURE (°C)

TIME (S)

# FIG. 8

## INTERNATIONAL SEARCH REPORT

| International application No. |
|---|
| PCT/JP2020/028711 |

A. CLASSIFICATION OF SUBJECT MATTER
Int. Cl. A24D1/20(2020.01)i, A24D1/22(2020.01)i, A24F47/00(2020.01)i,
A24F40/20(2020.01)i, A24F42/10(2020.01)i
FI: A24D1/20, A24F40/20, A24F42/10, A24D1/22, A24F47/00
According to International Patent Classification (IPC) or to both national classification and IPC

B. FIELDS SEARCHED

Minimum documentation searched (classification system followed by classification symbols)
Int. Cl. A24D1/20, A24D1/22, A24F40/00-47/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 63-148975 A (R J REYNOLDS TOBACCO CO.) 21 June 1988, page 4, upper right column, lines 8-19, page 5, lower right column, lines 2-7, page 8, lower left column, line 17 to lower right column, line 9, page 9, upper left column, line 12 to lower left column, line 11, fig. 1 | 1-3, 5-26<br>4 |
| Y | JP 2010-535530 A (PHILIP MORRIS PRODUCTS S.A.) 25 November 2010, paragraphs [0012], [0034], [0035] | 11-18 |
| Y<br>A | WO 2015/155289 A1 (PHILIP MORRIS PRODUCTS S.A.) 15 October 2015, page 3, line 15 to page 4, line 17, page 6, lines 20-25, page 9, line 29 to page 10, line 2, fig. 3 | 1-3, 5-10<br>4 |

☒ Further documents are listed in the continuation of Box C.　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01.09.2020 | 15.09.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2020/028711

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2018/016069 A1 (JAPAN TOBACCO INC.) 25 January 2018, paragraphs [0009], [0014], [0027], fig. 8 | 19-26 |

Form PCT/ISA/210 (continuation of second sheet) (January 2015)

| International application No. |
|---|
| PCT/JP2020/028711 |

| Patent Documents referred to in the Report | Publication Date | Patent Family | Publication Date |
|---|---|---|---|
| JP 63-148975 A | 21.06.1988 | US 4858630 A<br>column 2, lines 7-20,<br>column 3, line 67 to<br>column 4, line 3,<br>column 7, lines 42-<br>56, column 8, lines<br>14-43, fig. 1<br>EP 270916 A2<br>CN 87108020 A<br>KR 10-1988-0007016 A | |
| JP 2010-535530 A | 25.11.2010 | US 2009/0065011 A1<br>paragraphs [0002],<br>[0041], [0042]<br>WO 2009/022232 A2<br>EP 2173204 A2<br>KR 10-2010-0054141 A<br>CN 101778578 A | |
| WO 2015/155289 A1 | 15.10.2015 | (Family: none) | |
| WO 2018/016069 A1 | 25.01.2018 | US 2019/0142072 A1<br>paragraphs [0028],<br>[0038], [0077],<br>[0078], fig. 8<br>EP 3473117 A1<br>CN 109475181 A<br>KR 10-2019-0029701 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017203686 A
- JP 2004510422 W
- WO 2014104078 A
- JP 2017218699 A

**Non-patent literature cited in the description**

- Tabako-no-Jiten (Encyclopedia of Tobacco). Tobacco Academic Studies Center, 31 March 2009
- The Analytical Methods of Food Additives in Food. Ministry of Health, Labour and Welfare